# EUROPEAN PATENT APPLICATION

(11) **EP 2 871 122 A1**
(43) Date of publication of application: **13.05.2015**
(21) Application number: 14179952.8
(22) Date of filing: 06.08.2014
(51) Int. Cl.: B62J 17/08

(54) **Roof apparatus**

(30) Priority: 06.11.2013 JP 2013230519
(71) Applicant: Yamaha Hatsudoki Kabushiki Kaisha, Iwata-shi, Shizuoka 438-8501 (JP)
(72) Inventor: Wakamatsu, Katsumitsu, Bangsaothong, Samutprakarn 10540 (TW)
(74) Representative: Grünecker Patent- und Rechtsanwälte PartG mbB

(57) **Abstract**

A roof apparatus (2) includes a roof unit (27) connected to a rear of a saddle type vehicle (1), a front unit (28) connected to a handle (11), and an upper connection portion (30) by which the roof unit (27) and the front unit (28) are connected together, wherein a rotational axis (Ah) of the handle (11) extends rearwardly and upwardly, a turn axis (Ar) of a turnable shaft (73) of the upper connection portion (30) extends rearwardly and upwardly, the front unit (28) turns together with the handle (11) around the turn axis (Ar) of the turnable shaft (73) with respect to the roof unit (27) and the front unit (28) is formed so as not to interfere with the roof unit (27) when the steering angle of the handle (11) changes from a minimum to a maximum.

## Description

The present invention relates to a roof apparatus at least a portion of which is disposed above a seat of a saddle type vehicle, and relates to a saddle type vehicle provided with this roof apparatus.

There are cases in which a roof apparatus is mounted on a saddle type vehicle in order to protect a rider from wind, rain, dust, etc.

Japanese Unexamined Patent Publication No. 2013-067370 discloses a simple roof apparatus connected to a front cover of a two-wheeled vehicle. This roof apparatus does not turn rightwardly and leftwardly together with a handle even when the handle is turned.

Japanese Unexamined Utility Model Publication No. 60-117292 discloses a windshield-equipped cowl (roof apparatus) that turns together with a handle of a motorcycle body. The windshield of this roof apparatus turns rightwardly and leftwardly together with the handle when the handle is turned.

The roof apparatus of Japanese Unexamined Patent Publication No. 2013-067370 passes above a seat and passes in front of the handle, and extends to a front cover of the two-wheeled vehicle. The roof apparatus is connected to the front cover. Therefore, the roof apparatus is liable to be enlarged in a front-rear direction.

If the roof apparatus is large in the front-rear direction, the distance in the front-rear direction between the front surface of the roof apparatus and the rider will increase, and rain etc., are liable to beat against the rider. Therefore, the comfort of the rider may fall.

Additionally, the roof apparatus of Japanese Unexamined Patent Publication No. 2013-067370 extends to the front cover while passing in front of the handle. The front of the roof apparatus is connected to the front cover, and does not turn rightwardly and leftwardly together with the handle. If the roof apparatus is reduced in size in the front-rear direction in order to reliably protect the rider from rain etc., the front of the roof apparatus will be placed closer to the handle. Therefore, the maximum steering angle of the handle must be reduced to avoid the interference of the handle with the front of the roof apparatus.

On the other hand, in the roof apparatus of Japanese Unexamined Utility Model Publication No. 60-117292, the windshield of the roof apparatus turns together with the handle. Therefore, the roof apparatus might be able to be reduced in size in the front-rear direction without reducing the maximum steering angle of the handle.

However, in the roof apparatus of Japanese Unexamined Utility Model Publication No. 60-117292, a portion of the windshield that turns together with the handle is disposed above a rear cowl connected to the rear of the motorcycle body, and therefore the windshield is enlarged in an up-down direction. Therefore, the weight of the windshield may increase, and a load applied to the handle may increase (the handle may be heavy).

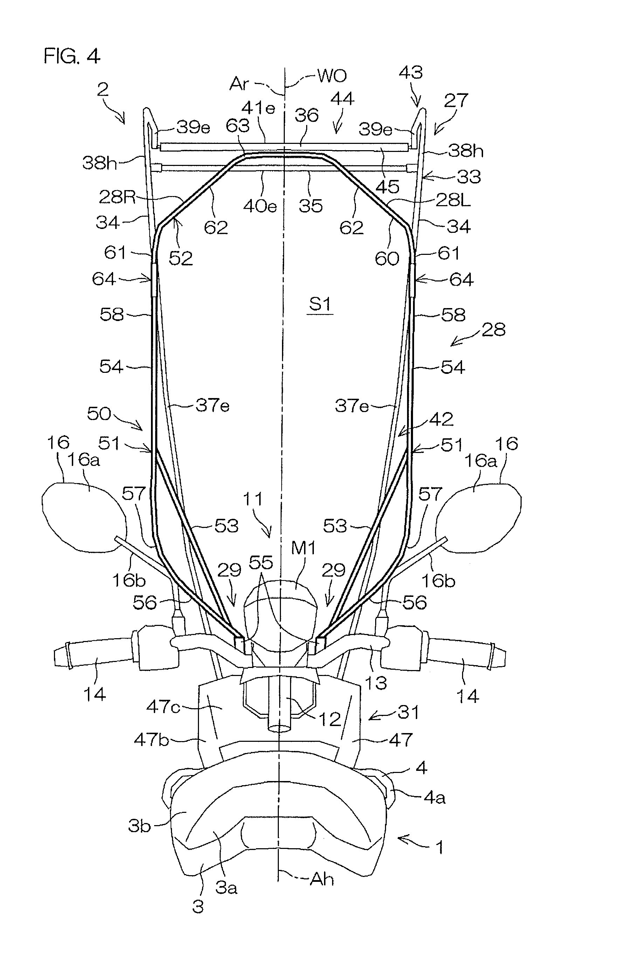

Additionally, in the roof apparatus of Japanese Unexamined Utility Model Publication No. 60-117292, the turn axis of the windshield is vertical with respect to the rear cowl while the rotational axis of the handle is inclined forwardly and rearwardly (see FIG. 4 of Japanese Unexamined Utility Model Publication No. 60-117292), and therefore when the handle is turned, the windshield is twisted, and its reaction force is applied onto the handle from the windshield. Therefore, the movement of the handle may be obstructed by the windshield, and a load applied to the handle may be higher.

It is an object of the invention to provide an improved roof apparatus for a saddle type vehicle avoiding the above mentioned problems, and a saddle type vehicle with this roof apparatus. This object is achieved by a roof apparatus according to claim 1, and by a saddle type vehicle according to claim 15.

In order to overcome the previously unrecognized and unsolved challenges described above, one preferred embodiment provides a roof apparatus at least one portion of which is disposed above a seat of a saddle type vehicle (vehicle main body). The roof apparatus includes a roof unit at least one portion of which is disposed above the seat of the saddle type vehicle and that is connected to a rear of the saddle type vehicle, a front unit that is connected to a handle of the saddle type vehicle and that extends upwardly from the handle, and an upper connection portion by which the roof unit and the front unit are connected together. A rotational axis of the handle extends rearwardly and upwardly. The upper connection portion has a turnable shaft, and a turn axis of the turnable shaft of the upper connection portion extends rearwardly and upwardly. The front unit turns together with the handle around the turn axis of the turnable shaft with respect to the roof unit. The front unit is formed so as not to interfere with the roof unit when a steering angle of the handle changes from a minimum to a maximum.

According to this arrangement, the roof unit is connected to the saddle type vehicle, and the front unit is connected to the handle. The upper connection portion connects the roof unit and the front unit to each other so that the front unit turns rightwardly and leftwardly around a turn axis with respect to the roof unit. Therefore, when the handle is turned, the handle and the front unit turn rightwardly and leftwardly with respect to the roof unit.

The front unit is connected to the handle, and therefore interference between the handle and the front unit can be avoided. Additionally, the front unit can be made smaller in size in the front-rear direction than in an arrangement in which the front unit is connected to the front cover. As a result, an increase in the load applied to the handle can be restrained, and the comfort of a rider can be improved.

Additionally, the turn axis of the turnable shaft of the upper connection portion extends rearwardly and upwardly, and inclines forwardly and rearwardly in the same way as the rotational axis of the handle. In other words, the turn axis of the front unit with respect to the roof unit inclines forwardly and rearwardly in the same way as the rotational axis of the handle. Therefore, the load transmitted from the front unit to the handle can be made smaller than when the turn axis of the turnable shaft is vertical. This makes it possible to further restrain an increase in the load applied to the handle.

As described above, the front unit turns rightwardly and leftwardly together with the handle. The upper portion of the front unit moves within a horizontal plane when the turn axis of the front unit with respect to the roof unit is vertical. On the other hand, when the turn axis of the front unit with respect to the roof unit inclines forwardly and rearwardly, the right end and the left end of the upper portion of the front unit move not only in the front-rear direction but also in the up-down direction when the handle is turned.

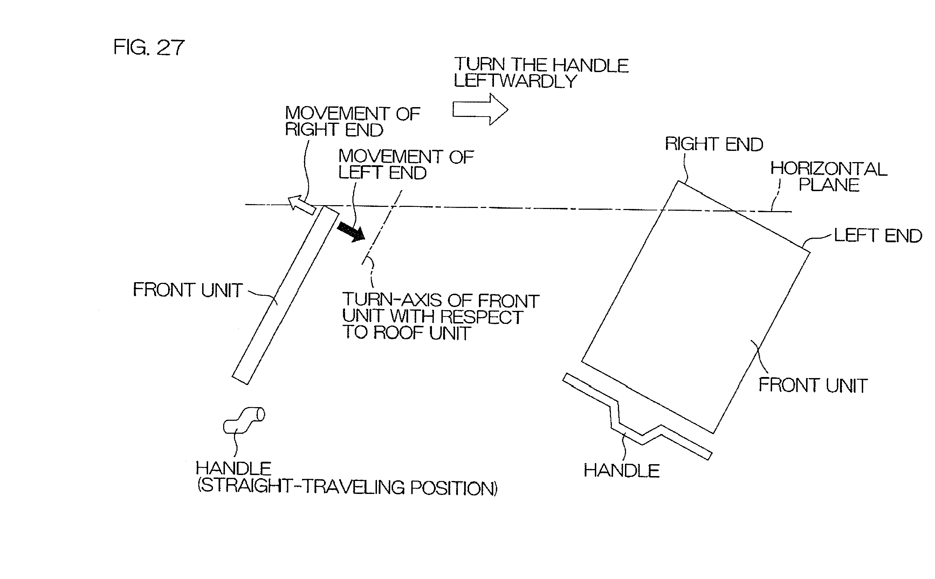

More specifically, as shown in FIG. 27, the left end of the upper portion of the front unit moves rearwardly, and the right end of the upper portion of the front unit moves forwardly when the handle turned leftwardly. The turn axis of the turnable shaft inclines forwardly and rearwardly, and therefore, at this time, the left end of the upper portion of the front unit moves not only rearwardly but also downwardly, and the right end of the upper portion of the front unit moves not only forwardly but also upwardly. The upper portion of the front unit performs a movement opposite to this when the handle is turned rightwardly.

The turn axis of the turnable shaft extends rearwardly and upwardly in this way, and therefore the right end and the left end of the upper portion of the front unit move not only in the front-rear direction but also in the up-down direction when the handle is turned. Therefore, there is a possibility that a portion of the front unit will interfere with the roof unit when the handle is turned.

However, the front unit is formed so as not to interfere with the roof unit when the steering angle of the handle is changed from the minimum to the maximum. In other words, the front unit does not interfere with the roof unit even when the handle has any steering angle. Therefore, it is possible to improve the comfort of a rider, as mentioned above, while preventing the interference between the roof unit and the front unit.

Additionally, the front unit is formed to have such a size as not to interfere with the roof unit even when the handle has any steering angle. In other words, the front unit is reduced in size so as not to interfere with the roof unit even when the handle has any steering angle. Therefore, it is possible to restrict the load applied to the handle from the front unit when the handle is turned. Therefore, it is possible to restrict the load applied to a rider from the handle. As a result, the comfort of the rider can be further improved.

In one preferred embodiment, the front unit may be connected to the handle between a meter and a grip of the handle grasped by a rider in a vehicle width direction.

According to this arrangement, the position between the meter and the grip in the vehicle width direction is used as a connection position between the front unit and the handle. Therefore, the meter and the grip do not interfere with the front unit. Additionally, the front unit is connected to the handle at a more inward position in the vehicle width direction than the grip, and therefore the front unit can be made smaller in size than when the front unit is connected to the handle at a more outward position in the vehicle width direction than the grip. Therefore, an increase in the load applied to the handle is restrained. Moreover, the front unit is connected to the handle at a more outward position in the vehicle width direction than the meter of the saddle type vehicle, and the handle supports the lower end of the front unit with a somewhat wide interval, and therefore the supporting rigidity of the front unit by means of the handle can be raised while securing the visibility of the meter.

In one preferred embodiment, the front unit may be connected to the handle between a handle holder attached to a handle bar of the handle and the grip of the handle grasped by the rider in the vehicle width direction.

According to this arrangement, the position between the handle holder and the grip in the vehicle width direction is used as a connection position between the front unit and the handle. Therefore, the attachment of the handle holder to the handle bar or the attachment of the grip to the handle bar is not obstructed by the front unit. Additionally, the front unit is connected to the handle bar at a more inward position in the vehicle width direction than the grip, and therefore the front unit can be made smaller in size than when the front unit is connected to the handle bar at a more outward position in the vehicle width direction than the grip. Therefore, an increase in the load applied to the handle is restrained. Moreover, the front unit is connected to the handle bar at a more outward position in the vehicle width direction than the handle holder, and the handle bar supports the lower end of the front unit with a somewhat wide interval, and therefore the supporting rigidity of the front unit by means of the handle bar can be raised.

In one preferred embodiment, the handle may include a handle bar to which the handle holder is attached. The handle bar may include a linear central portion to which the handle holder is attached, a linear intermediate portion disposed at a more outward position in the vehicle width direction than the central portion, a linear outer end portion that is disposed at a more outward position in the vehicle width direction than the intermediate portion and to which the grip is attached, and an outer curved portion that extends from an outer end of the intermediate portion to an inner end of the outer end portion and that is curved.

In this case, the front unit may be connected to the intermediate portion of the handle bar, or may be connected to the outer curved portion of the handle bar.

When the front unit is connected to the intermediate portion of the handle bar, it is easy to attach the front unit to the handle bar. Additionally, the lower end of the front unit can be made smaller in size in the vehicle width direction than when the front unit is connected to the handle bar at a more outward position in the vehicle width direction than the intermediate portion of the handle bar. As a result, an increase in the load applied to the handle can be restrained, and the comfort of the rider can be improved.

When the front unit is connected to the outer curved portion of the handle bar, the handle bar can support the lower end of the front unit with a wider interval than when the front unit is connected to the handle bar at a more inward position in the vehicle width direction than the outer curved portion of the handle bar. Therefore, the supporting rigidity of the front unit by means of the handle bar can be raised.

In one preferred embodiment, a right side edge and a left side edge of the front unit may extend downwardly from the upper connection portion toward an outer side in the vehicle width direction.

According to this arrangement, the right side edge of the front unit extends downwardly toward the right side from the upper connection portion, and the left side edge of the front unit extends downwardly toward the left side from the upper connection portion. In other words, the interval between the right side edge and the left side edge of the front unit becomes narrower in proportion to an approach to the upper connection portion. Therefore, the upper portion of the front unit is reduced in size. As a result, an increase in the load applied to the handle is restrained. Additionally, it is easy to prevent the interference between the roof unit and the front unit because the upper portion of the front unit is reduced in size.

In one preferred embodiment, the front unit may include a main portion that extends upwardly from the handle and a single shaft portion that extends upwardly from the main portion toward the upper connection portion.

According to this arrangement, the upper portion of the front unit includes the single shaft portion that extends upwardly from the main portion. Therefore, the upper portion of the front unit can be reduced in size. As a result, an increase in the load applied to the handle is restrained. Additionally, the width of the upper portion of the front unit is narrow, and therefore the front unit does not interfere with the roof unit when the handle is turned.

In one preferred embodiment, the roof unit may include a pent-roof portion disposed at a more forward position than the upper connection portion.

According to this arrangement, a portion (the pent-roof portion) of the roof unit is disposed at a more forward position than the upper connection portion. In other words, the front unit does not interfere with the roof unit even when the handle has any steering angle, and therefore the roof unit can be extended to a more forward position than the upper connection portion. As a result, the front end of the roof unit moves forwardly. Rain, dust, etc., mainly fall obliquely toward the saddle type vehicle from a diagonally upward and forward position with respect to the saddle type vehicle while the saddle type vehicle is traveling. Therefore, rain, etc., can be blocked more certainly by moving the front end of the roof unit forwardly. Therefore, it is difficult for rain, etc., to strike a rider. As a result, the comfort of the rider can be improved.

In one preferred embodiment, the upper connection portion may further include a rolling bearing disposed on the turn axis of the turnable shaft. The rolling bearing may include an inner ring fixed to either one of the roof unit and the front unit, an outer ring fixed to a remaining one of the roof unit and the front unit, and a plurality of rolling elements disposed between the inner ring and the outer ring.

According to this arrangement, the front unit is supported by the rolling bearing of the upper connection portion turnably around the turn axis. As a result, the roof unit and the front unit are connected together through the rolling bearing turnably around the turn axis. Therefore, the front unit turns smoothly around the turn axis with respect to the roof unit. As a result, an increase in the load of the handle is restrained.

In one preferred embodiment, the front unit may extend forwardly from the handle and further extend rearwardly.

According to this arrangement, the front unit extends forwardly from the handle, and further extends upwardly toward the roof unit. The front unit extends forwardly from the handle, and therefore the interval between the front unit and the handle in the front-rear direction can be widened. This makes it possible for a rider to easily move the hands of the rider without being hindered by the front unit. Additionally, a space in which existing components, such as wires or hoses, are disposed can be secured between the front unit and the handle, and therefore these components are not required to be moved to other places.

In one preferred embodiment, the front unit may include a parallel portion parallel to the rotational axis of the handle when the roof apparatus is viewed laterally and an upper inclined portion that obliquely inclines with respect to the parallel portion when the roof apparatus is viewed laterally and that extends upwardly from the parallel portion.

According to this arrangement, the parallel portions of the front unit are parallel to the rotational axis of the handle of the roof apparatus when viewed laterally. Additionally, the upper inclined portion of the front unit obliquely inclines with respect to the parallel portions when the roof apparatus is viewed laterally, and extends upwardly from the parallel portions. This makes it possible to secure a space between the rider and the front unit in the front-rear direction. Therefore, a feeling of oppression given to the rider by the front unit is reduced. This makes it possible to improve the comfort of the rider while reducing the front unit in size. Additionally, an increase in the load applied to the handle is restrained because the front unit is reduced in size.

In one preferred embodiment, a height from the handle to the upper end of the parallel portion may be greater than a height from the upper end of the parallel portion to the upper connection portion.

According to this arrangement, the upper end of the parallel portion of the front unit is disposed at high positions. In more detail, a height from the handle to the upper end of the parallel portion is greater than a height from the upper end of the parallel portion to the upper connection portion. The parallel portion of the front unit is parallel to the rotational axis of the handle when the roof apparatus is viewed laterally. The front unit can be reduced in size while making it difficult for the front unit to come into rider's field of vision by securing the height of the parallel portion of the front unit. The front unit is thus reduced in size, and therefore an increase in the load applied to the handle is restrained. Additionally, it is difficult for the front unit to come into rider's field of vision, and therefore the comfort of the rider can be raised.

In one preferred embodiment, the roof apparatus may further include a height adjustment mechanism that changes a height from the seat to the roof unit by changing a height of the front unit.

According to this arrangement, the height of the front unit is increased and decreased by the height adjustment mechanism. The roof unit is supported by the front unit through the upper connection portion. The height of the roof unit also increases and decreases when the height of the front unit increases and decreases. Therefore, the height from the seat to the roof unit can be changed by changing the height of the front unit. This makes it possible to place the roof unit at an optimal height corresponding to the seated height of the rider. Therefore, the rider can be more certainly protected from rain, etc., and the comfort of the rider can be improved. Additionally, the roof apparatus can be reduced in size because there is no need to place the roof unit at an unnecessarily high position. This makes it possible to restrain an increase in the load applied to the handle.

In one preferred embodiment, the roof unit may be connected to the rear of the saddle type vehicle behind the seat. A right side edge and a left side edge of the roof unit may extend upwardly from the rear of the saddle type vehicle toward the outer side in the vehicle width direction.

According to this arrangement, the roof unit is connected to the rear of the saddle type vehicle behind the seat, and therefore a riding space for the rider can be made wider rearwardly than when the roof unit is connected to the rear of the saddle type vehicle beside the seat. This makes it possible to improve the comfort of the rider. Additionally, the interval between the right side edge and the left side edge of the roof unit becomes greater in proportion to receding from the rear of the saddle type vehicle upwardly, and therefore the width with which the head of the rider is covered can be secured. Therefore, the roof function can be secured while reducing the roof apparatus in size. Therefore, the roof function can be secured while restraining an increase in the load applied to the handle.

In one preferred embodiment, the saddle type vehicle may further include a grab frame that is disposed at least behind the seat when the vehicle is viewed planarly and that is grasped by a user of the saddle type vehicle. In this case, the roof unit may be connected to the grab frame. The grab frame may be disposed only behind the seat when the vehicle is viewed planarly, or may be disposed behind the seat and beside the seat when the vehicle is viewed planarly.

According to this arrangement, the saddle type vehicle is provided with the grab frame grasped by a user of the saddle type vehicle. At least one portion of the grab frame is disposed behind the seat when the vehicle is viewed planarly. The roof unit is connected to the grab frame. Therefore, the roof unit can be made smaller in size in the up-down direction than when the roof unit is connected directly to the vehicle body frame. Additionally, the grab frame is exposed behind the seat, and therefore the attachment of the roof unit to the saddle type vehicle can be performed more easily than when the roof unit is connected to the vehicle body frame.

In one preferred embodiment, the roof unit may extend rearwardly and upwardly from the rear of the saddle type vehicle when the vehicle is viewed laterally.

According to this arrangement, the roof apparatus is attached to the saddle type vehicle such that the roof unit extends rearwardly and upwardly from the rear of the saddle type vehicle. The roof unit thus extends rearwardly from the rear of the saddle type vehicle, and therefore a riding space for the rider can be widened rearwardly. This makes it possible to improve the comfort of the rider while reducing the roof apparatus in size.

In one preferred embodiment, at least one portion of the roof unit may include an elastically deformable member.

According to this arrangement, at least one portion of the roof unit is elastically deformable, and therefore it is possible to absorb errors in assembly or variations in dimensions of the roof unit. Additionally, the roof unit is elastically deformable, and therefore the degree of freedom of the shape of the roof unit rises. Therefore, a riding space for the rider can be further widened, and the comfort of the rider can be improved.

In one preferred embodiment, at least one of the roof unit and the front unit may include a left-and-right pair of frames spaced in the vehicle width direction.

According to this arrangement, either of or both of the roof unit and the front unit are provided with a left-and-right pair of frames spaced in the vehicle width direction. Therefore, at least one of the roof unit and the front unit is formed of the frames. When the roof unit is formed of a panel continuous from the right side edge of the roof unit to the left side edge of the roof unit, the weight of the roof unit is liable to become greater than when the roof unit is formed of the frames. Therefore, the roof apparatus can be lightened by forming at least one of the roof unit and the front unit of the frames. This makes it possible to restrain an increase in the load applied to the handle.

Another preferred embodiment provides a saddle type vehicle including the aforementioned roof apparatus. According to this arrangement, the same effect as above can be fulfilled.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a left side view of a saddle type vehicle according to a first preferred embodiment.
FIG. 2 is a left side view of a roof apparatus.
FIG. 3 is a plan view of the roof apparatus.
FIG. 4 is a front view of the roof apparatus.
FIG. 5 is a rear view of the roof apparatus.
FIG. 6 is a left side view of the roof apparatus when a handle is turned leftwardly.
FIG. 7 is a front view of the roof apparatus when the handle is turned leftwardly.
FIG. 8 is a plan view of the handle.
FIG. 9 is a view showing a front bracket.
FIG. 10 is a view showing a cross section of the front bracket along line X-X in FIG. 9.
FIG. 11 is a perspective view showing an upper connection portion.
FIG. 12 is a cross-sectional view of the upper connection portion along a vertical plane (the center in a width direction).
FIG. 13 is a rear view of a rear connection portion.
FIG. 14 is a perspective view of the rear connection portion.
FIG. 15 is an exploded view of a height adjustment mechanism.
FIG. 16 is a cross-sectional view of the height adjustment mechanism.
FIG. 17 is a plan view of a handle according to a second preferred embodiment.
FIG. 18 is a front view of a portion of a front connection portion.
FIG. 19 is a cross-sectional view of the front connection portion along a plane perpendicular to the axial direction of a handle bar.
FIG. 20 is a rear view of a rear connection portion according to a third preferred embodiment.
FIG. 21 is a perspective view of the rear connection portion.
FIG. 22 is a front view of a roof apparatus according to a fourth preferred embodiment.
FIG. 23 is a front view of a roof apparatus according to a fifth preferred embodiment.
FIG. 24 is a front view of a roof apparatus according to a sixth preferred embodiment.
FIG. 25 is a schematic view showing a front shield according to a seventh preferred embodiment.
FIG. 26 is a left side view showing a lower portion of a front unit according to an eighth preferred embodiment.
FIG. 27 is a view to describe the movement of the front unit when the handle is turned leftwardly in an arrangement in which the turn axis of the front unit with respect to the roof unit is inclined forwardly and rearwardly.

### DETAILED DESCRIPTION OF THE PREFERRED EMBODIMENTS

Front-rear, up-down, and right-left directions mentioned in the following description are based on a basic posture equivalent to a state in which a saddle type vehicle is traveling straight on a horizontal plane (a state in which a handle is in a straight-traveling position) and based on the point of view of a driver when the driver faces forwardly. The right-left direction is equivalent to a vehicle width direction. "The center in the width direction" is equivalent to "a vertical plane that passes through the center line of a head tube and that is perpendicular to the rotational axis of a rear wheel." The saddle type vehicle and the roof apparatus that are in the basic posture will be hereinafter described unless specific notice is given.

### First Preferred Embodiment

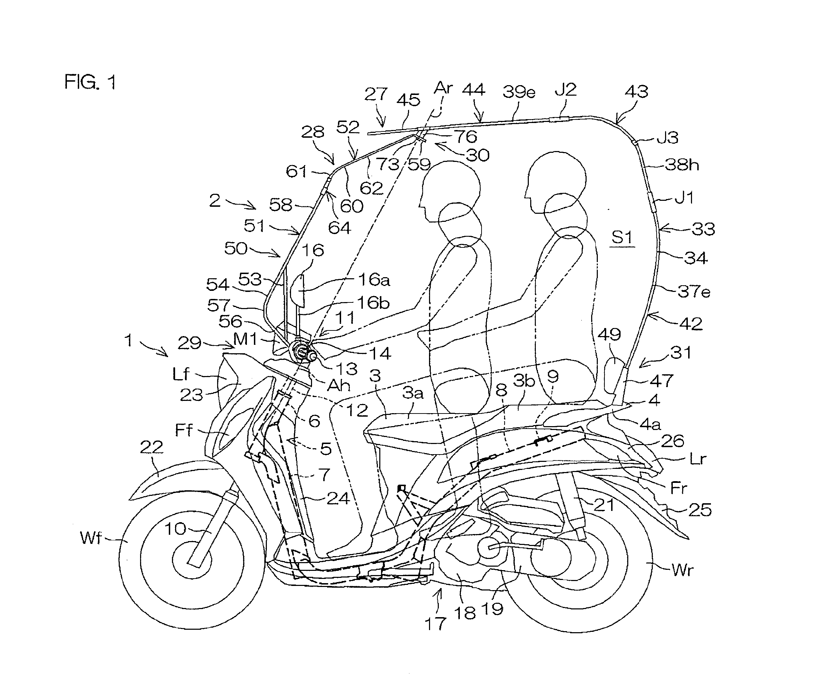

As shown in FIG. 1, the saddle type vehicle includes a saddle type vehicle 1 including a seat 3 on which a rider sits and a roof apparatus 2 disposed above the seat 3.

The roof apparatus 2 is detachably attached to the saddle type vehicle 1. The saddle type vehicle 1 is independent of the roof apparatus 2. In other words, the saddle type vehicle 1 is capable of traveling even in a state in which the roof apparatus 2 has been detached therefrom. Hereinafter, the outline of the saddle type vehicle 1 will be first described, and then the roof apparatus 2 will be described.

As shown in FIG. 1, the saddle type vehicle 1 includes a vehicle body frame 5, the saddle type seat 3 disposed above the vehicle body frame 5, and a grab frame 4 disposed behind and beside the seat 3.

As shown in FIG. 1, the vehicle body frame 5 includes a head tube 6 that extends rearwardly and upwardly, a main frame 7 that extends rearwardly and downwardly from the head tube 6, and a pair of seat frames 8 that extend rearwardly and upwardly from the main frame 7. The vehicle body frame 5 additionally includes a cross member 9 that connects the pair of seat frames 8 together. The pair of seat frames 8 extend in the front-rear direction, and are spaced in the vehicle width direction. The head tube 6 is disposed at the center of the saddle type vehicle 1 in the vehicle width direction. The pair of seat frames 8 are disposed on the right side and on the left side of a center WO in the width direction of the saddle type vehicle 1, respectively. The cross member 9 extends from one of the seat frames 8 toward the other seat frame 8.

As shown in FIG. 1, the seat 3 is disposed above the pair of seat frames 8. The seat 3 is disposed behind the head tube 6. The seat 3 is supported by the pair of seat frames 8. The seat 3 extends in the front-rear direction. The seat 3 may be for one person or for two persons. FIG. 1 shows an example in which a two-person seat including a driver seat 3a on which a driver sits and a tandem seat 3b on which a fellow passenger sits is used as the seat 3.

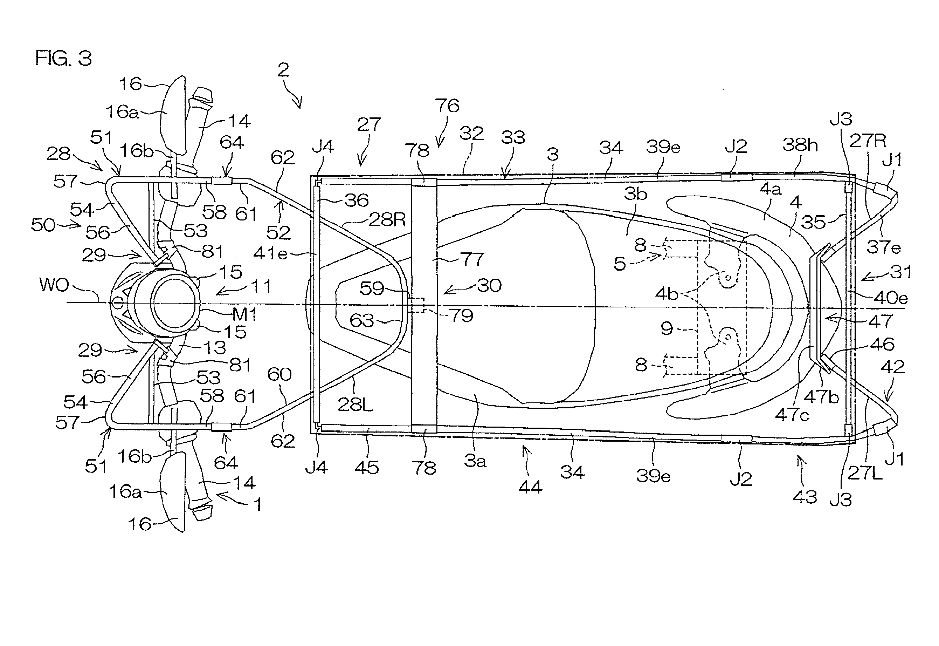

As shown in FIG. 3, the grab frame 4 is formed in a U shape that is forwardly open when the vehicle is viewed planarly. At least one portion of the grab frame 4 is disposed at a height equal to that of the rear end of the seat 3. The grab frame 4 includes a grab portion 4a formed in a U shape that is forwardly open when the vehicle is viewed planarly and two bracket portions 4b that extend from the grab portion 4a toward the vehicle body frame 5. The grab portion 4a is disposed on the rear side, on the right side, and on the left side with respect to the seat 3 when the vehicle is viewed planarly. The bracket portion 4b extends from the grab portion 4a inwardly in the vehicle width direction. The bracket portion 4b is fixed to the vehicle body frame 5.

The grab portion 4a of the grab frame 4 is grasped by, for example, a fellow passenger sitting on the seat 3 or a user who is standing beside the saddle type vehicle 1. If the grab portion 4a has a shape that enables the user to grasp it with user's hands, the cross-sectional shape of the grab portion 4a (the contour of the cross section of the grab portion 4a perpendicular to the axial direction of the grab portion 4a) is not considered. In other words, the cross-sectional shape of the grab portion 4a may be formed only by either a straight line or a curve or may be formed by both lines.

As shown in FIG. 1, the saddle type vehicle 1 includes a front fork 10 supported by the vehicle body frame 5, a front wheel Wf rotatably supported by the front fork 10, and a handle 11 operated by a driver.

As shown in FIG. 1, the front fork 10 rotatably supports the front wheel Wf. The front fork 10 is supported by the head tube 6. Therefore, the front wheel Wf is supported by the vehicle body frame 5 through the front fork 10. The front fork 10 is turnable around a rotational axis Ah (center line of a steering shaft 12) with respect to the head tube 6. The handle 11 is connected to the front fork 10. When the handle 11 is turned, the front wheel Wf and the front fork 10 are turned rightwardly and leftwardly together with the handle 11. As a result, the saddle type vehicle 1 is steered.

As shown in FIG. 1, the handle 11 includes the steering shaft 12 inserted in the head tube 6 and a handle bar 13 that turns around the rotational axis Ah together with the steering shaft 12.

As shown in FIG. 1, the steering shaft 12 is supported by the head tube 6 turnably around the rotational axis Ah. The steering shaft 12 extends rearwardly and upwardly. The steering shaft 12 inclines forwardly and rearwardly with respect to the vertical direction so that the upper end of the steering shaft 12 is located at a more rearward position than the lower end of the steering shaft 12. The rotational axis Ah extends rearwardly and upwardly. The handle bar 13 is disposed at a higher position than the head tube 6. The handle bar 13 is disposed at a higher position than the seat 3 and at a more forward position than the seat 3.

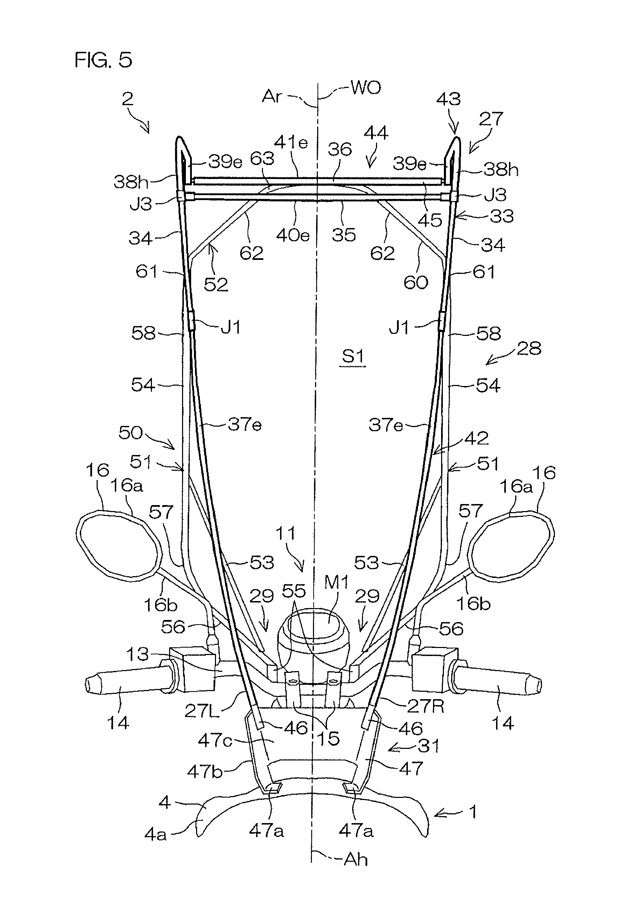

As shown in FIG. 5, the handle 11 includes two grips 14 that are grasped by a rider and a handle holder 15 by which the handle bar 13 is connected to the steering shaft 12. The handle 11 additionally includes two rearview mirrors 16 that rotate around the rotational axis Ah together with the handle bar 13 and a meter M1 that rotates around the rotational axis Ah together with the handle bar 13.

As shown in FIG. 5, the two grips 14 are attached to two outer ends (right end and left end) of the handle bar 13, respectively. The handle holder 15 is attached to the central portion of the handle bar 13. The handle holder 15 turns around the rotational axis Ah together with the handle bar 13. Likewise, the grip 14 turns around the rotational axis Ah together with the handle bar 13.

As shown in FIG. 5, the two rearview mirrors 16 are attached to the handle bar 13 at more outward positions, respectively, in the vehicle width direction than the handle holder 15. The rearview mirror 16 includes a mirror holding portion 16a that holds a mirror and a mirror shaft 16b by which the handle bar 13 and the mirror holding portion 16a are connected together. The mirror shaft 16b extends upwardly from the handle bar 13. The mirror holding portion 16a is disposed at a higher position than the handle bar 13. The two grips 14 are attached to the handle bar 13 at more outward positions, respectively, in the vehicle width direction than the lower end of the rearview mirror 16.

As shown in FIG. 3, the meter M1 overlaps with the handle holder 15 when the vehicle is viewed planarly. As shown in FIG. 5, the meter M1 is disposed in front of the handle holder 15. The meter M1 is disposed in front of the central portion of the handle bar 13. The meter M1 overlaps with the center WO in the width direction. The meter M1 may be at least one of a speedometer, a fuel gauge, an odometer, and an oil temperature gauge, or may be a device other than these devices. As shown in FIG. 1, the meter M1 is disposed at a higher position than the head tube 6 of the vehicle body frame 5. The meter M1 is disposed at a lower position than the mirror holding portion 16a of the rearview mirror 16.

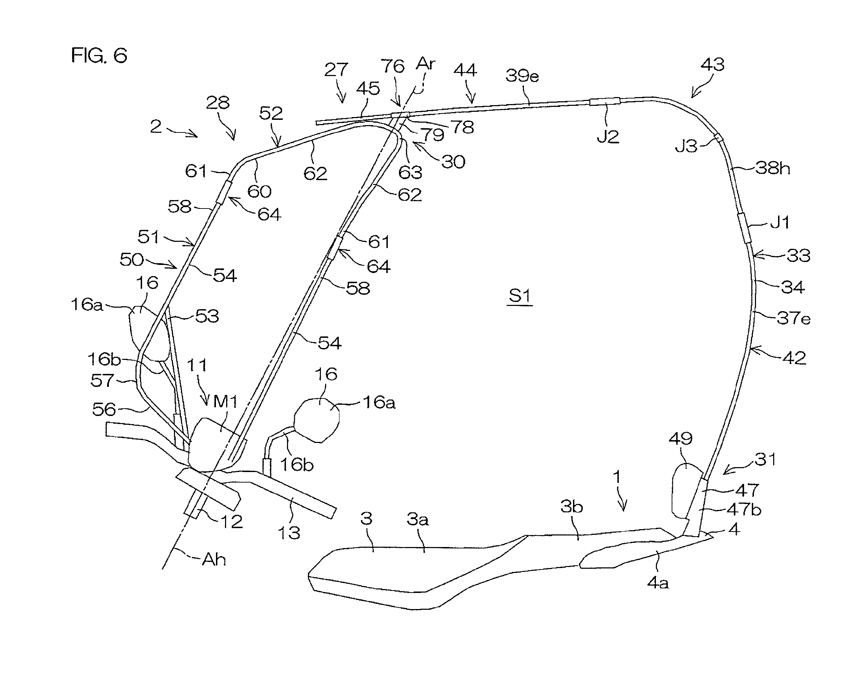

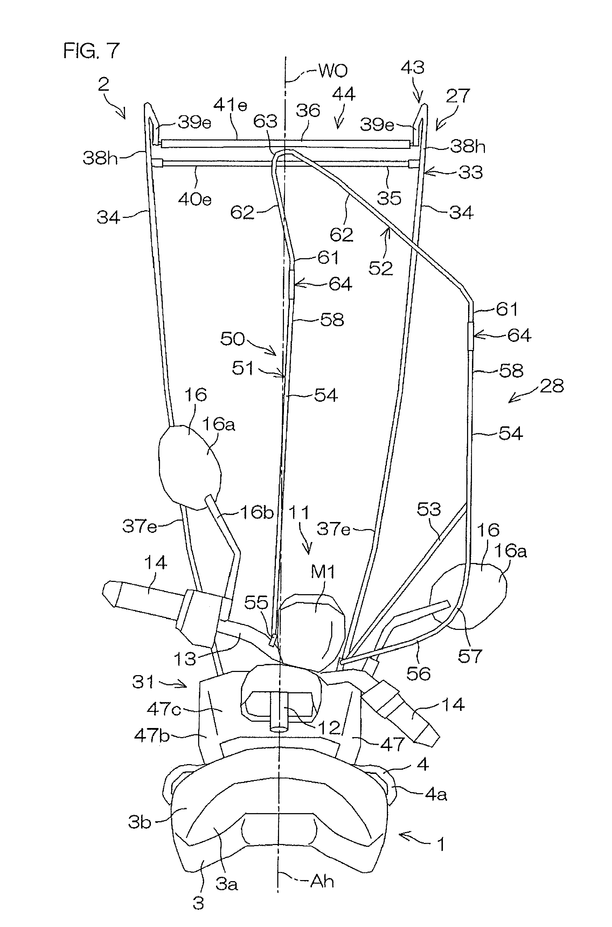

The handle 11 is turnable rightwardly and leftwardly with respect to the vehicle body frame 5. The handle 11 is turnable between a rightward maximum steering position and a leftward maximum steering position between which the straight-traveling position is placed as a center. FIG. 6 and FIG. 7 show a state in which the handle 11 is disposed at the leftward maximum steering position. The other figures, such as FIG. 1 to FIG. 5, show a state in which the handle 11 is disposed at the straight-traveling position. The straight-traveling position, the rightward maximum steering position, and the leftward maximum steering position are all the positions of the handle 11 around the rotational axis Ah. The straight-traveling position is a position at which the saddle type vehicle 1 travels straight, whereas the rightward and leftward maximum steering positions are positions at which the saddle type vehicle 1 turns. The straight-traveling position is a position at which the steering angle (angle around the rotational axis Ah) of the handle 11 is the minimum (zero), whereas the rightward and leftward maximum steering positions are positions at which the steering angle of the handle 11 is the maximum. The rightward and leftward maximum steering positions are positions that are mutually laterally symmetrical with respect to the straight-traveling position, whereas the straight-traveling position is a position that is intermediate between the rightward and leftward maximum steering positions.

As shown in FIG. 1, the saddle type vehicle 1 includes a swing unit 17 that generates power by which the saddle type vehicle 1 can travel and a rear wheel Wr rotatably supported by the swing unit 17.

The swing unit 17 includes a power source (internal combustion engine or electric motor) 18 and a driving mechanism 19 that transmits the power of the power source 18 to the rear wheel Wr. The swing unit 17 is attached to the vehicle body frame 5 through a pivot shaft extending in the vehicle width direction, and is swingable in the up-down direction around a pivot axis (center line of the pivot shaft) with respect to the vehicle body frame 5. The upper end of a rear suspension 21 is attached to the vehicle body frame 5, and the lower end of the rear suspension 21 is attached to the rear end of the swing unit 17. The rear wheel Wr is rotatably supported by the rear end (portion of the driving mechanism 19) of the swing unit 17. The rear wheel Wr is attached to the vehicle body frame 5 through the pivot shaft and the swing unit 17. The rear wheel Wr is swingable in the up-down direction around the pivot axis together with the swing unit 17 with respect to the vehicle body frame 5.

As shown in FIG. 1, the saddle type vehicle 1 includes a front fender 22 with which the front wheel Wf is covered, a front cover 23 disposed in front of the head tube 6, and an inner panel 24 disposed behind the head tube 6. The saddle type vehicle 1 additionally includes a headlight Lf disposed in a light opening of the front cover 23 and a pair of front flashers Ff disposed in a flasher opening of the front cover 23.

As shown in FIG. 1, the front cover 23 and the inner panel 24 are disposed below the handle 11. The front cover 23 is disposed in front of the inner panel 24. The seat 3 is disposed behind the front cover 23 and the inner panel 24. The front cover 23 and the inner panel 24 are members different from each other. A right side portion and a left side portion of the front cover 23 are disposed on the right side portion and the left side portion of the inner panel 24, respectively. The front cover 23 and the inner panel 24 are attached to the vehicle body frame 5, thereby restricting their movements with respect to the vehicle body frame 5.

As shown in FIG. 1, the saddle type vehicle 1 includes a rear fender 25 with which the rear wheel Wr is covered and a rear cover 26 disposed on the upper side, on the right side, and on the left side of the pair of seat frames 8. The saddle type vehicle 1 additionally includes a taillight Lr disposed in a light opening of the rear cover 26 and a pair of rear flashers Fr disposed in a flasher opening of the rear cover 26.

As shown in FIG. 1, the rear cover 26 is disposed behind the front cover 23 and the inner panel 24 when the vehicle is viewed laterally. A portion of the rear cover 26 is disposed between the seat 3 and the rear wheel Wr in the up-down direction when the vehicle is viewed laterally. The rear end of the rear cover 26 is disposed at a more rearward position than the seat 3. The rear end of the rear fender 25 is disposed at a more rearward position than the rear cover 26. The front of the rear fender 25 is disposed in the rear cover 26. The rear of the rear fender 25 extends rearwardly and downwardly from the rear cover 26 when the vehicle is viewed laterally. The rear cover 26 is attached to the vehicle body frame 5, thereby restricting its movement with respect to the vehicle body frame 5.

Next, the roof apparatus 2 will be described.

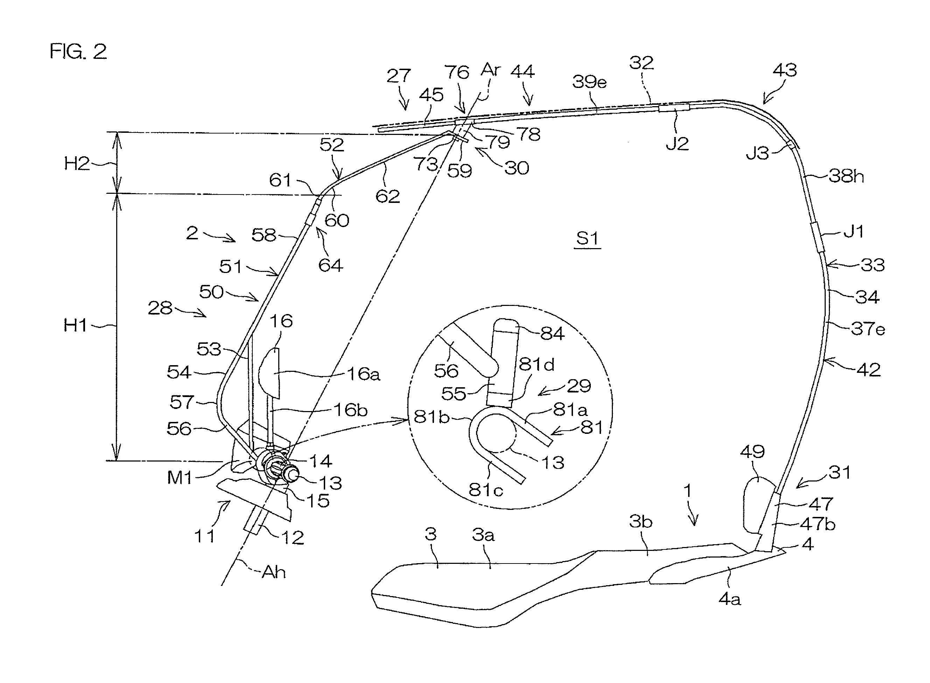

As shown in FIG. 2, the roof apparatus 2 includes a roof unit 27 that is disposed above the seat 3 and a front unit 28 that extends upwardly from the handle 11 toward the roof unit 27. In FIG. 4, the outline of the front unit 28 is shown by a thick line, and, in FIG. 5, the outline of the roof unit 27 is shown by a thick line. The roof apparatus 2 additionally includes an upper connection portion 30 by which the roof unit 27 and the front unit 28 are connected together, a rear connection portion 31 by which the roof unit 27 and the rear of the saddle type vehicle 1 are connected together, and a front connection portion 29 by which the front unit 28 and the handle 11 are connected together.

As shown in FIG. 1, the roof unit 27 is disposed above and behind a rider (a driver or a fellow passenger) sitting on the seat 3. The front unit 28 is disposed in front of the rider sitting on the seat 3. The entirety of the roof unit 27 and the front unit 28 is formed in a U shape that is downwardly open when the vehicle is viewed planarly. The roof unit 27 and the front unit 28 define a riding space S1 in which a rider's upper-body is placed.

As shown in FIG. 1, the roof unit 27 is connected to the saddle type vehicle 1 by means of the rear connection portion 31, thereby restricting its movement with respect to the saddle type vehicle 1. The front unit 28 is connected to the handle 11 by means of the front connection portion 29, thereby restricting its movement with respect to the handle 11. Therefore, the front unit 28 turns around the rotational axis Ah together with the handle 11. The upper connection portion 30 connects the roof unit 27 and the front unit 28 to each other so that the front unit 28 turns rightwardly and leftwardly around a turn axis Ar with respect to the roof unit 27. When the handle 11 is turned, the handle 11 and the front unit 28 turn rightwardly and leftwardly with respect to the roof unit 27.

As shown in FIG. 1, the turn axis Ar of the upper connection portion 30 extends rearwardly and upwardly. In other words, the upper end of the turn axis Ar is disposed at a more rearward position than the lower end of the turn axis Ar. The inclination angle of the turn axis Ar with respect to the vertical direction is equal to the inclination angle of the rotational axis Ah of the handle 11 with respect to the vertical direction. The turn axis Ar is disposed on the extension line of the rotational axis Ah. Therefore, the turn axis Ar and the rotational axis Ah are disposed on the same axis. Without being limited to being on the same axis, the turn axis Ar and the rotational axis Ah may be disposed on mutually different axes. Additionally, the inclination angle of the turn axis Ar with respect to the vertical direction may be different from the inclination angle of the rotational axis Ah with respect to the vertical direction.

As shown in FIG. 2 and FIG. 3, the roof unit 27 includes a roof sheet 32 that is disposed above the seat 3 so as to be located above a rider sitting on the seat 3 and a roof frame 33 that supports the roof sheet 32. In FIG. 2 and FIG. 3, the outline of the roof sheet 32 is shown by a thick chain double-dashed line, and, in the other figures, the roof sheet 32 is not shown.

As shown in FIG. 3, the roof sheet 32 has a rectangular shape that extends in the front-rear direction when the vehicle is viewed planarly. The roof sheet 32 overlaps with the seat 3 when the vehicle is viewed planarly. A right side edge and a left side edge of the roof sheet 32 that extends in the front-rear direction when the vehicle is viewed planarly are disposed at more outward positions in the vehicle width direction than the seat 3. The width (length in the vehicle width direction) of the roof sheet 32 is greater than the width of the seat 3. A front edge of the roof sheet 32 that extends in the vehicle width direction when the vehicle is viewed planarly is disposed at a more forward position than the rear end of the seat 3, and is disposed at a more rearward position than the handle 11. A rear edge of the roof sheet 32 that extends in the vehicle width direction when the vehicle is viewed planarly is disposed at a more rearward position than the seat 3. All sides of the roof sheet 32 are held by the roof frame 33 that forms the outline of the roof unit 27.

As shown in FIG. 3, the roof frame 33 includes a left-and-right pair of side frames 34 that are spaced in the vehicle width direction and one or more cross frames by which the pair of side frames 34 are connected together. FIG. 3 shows an example in which two cross frames (a front cross frame 36 and a rear cross frame 35) are disposed at the roof frame 33.

As shown in FIG. 3, the roof frame 33 includes a plurality of shafts that form the side frame 34, the front cross frame 36, and the rear cross frame 35 and a plurality of joints by which the shafts are connected together. FIG. 3 shows an example in which the side frame 34 includes the plurality of shafts and the plurality of joints. The shafts include elastic shafts that are elastically deformable and hard shafts that are harder than the elastic shafts. The elastic shaft is made of, for example, resin material such as FRP (fiber-reinforced plastics). The hard shaft is made of, for example, hard material, such as iron, that is harder than resin. The hard shaft is less flexible than the elastic shaft.

As shown in FIG. 2, each side frame 34 includes two elastic shafts (a first elastic shaft 37e and a second elastic shaft 39e), a first hard shaft 38h, and two joints (a first joint J1 and a second joint J2).

As shown in FIG. 2, the first elastic shaft 37e extends upwardly from the rear of the saddle type vehicle 1. The upper end of the first elastic shaft 37e is connected to the lower end of the first joint J1 formed in a cylindrical shape. The lower end of the first hard shaft 38h is connected to the upper end of the first joint J1. The first hard shaft 38h extends upwardly from the first joint J1. The upper end of the first hard shaft 38h is connected to the rear end of the second joint J2 formed in a cylindrical shape. The rear end of the second elastic shaft 39e is connected to the front end of the second joint J2. The first hard shaft 38h forms a roof corner portion 43.

As shown in FIG. 5, the rear cross frame 35 includes, for example, a third elastic shaft 40e and two third joints J3. The T-shaped third joint J3 is held by an intermediate portion of the first hard shaft 38h. The right end of the third elastic shaft 40e is connected to the third joint J3 on the right side. Likewise, the left end of the third elastic shaft 40e is connected to the third joint J3 on the left side. As a result, the two first hard shafts 38h are connected together by means of the third elastic shaft 40e.

As shown in FIG. 3, the front cross frame 36 includes, for example, a fourth elastic shaft 41 e and two fourth joints J4. The L-shaped fourth joint J4 is connected to the front end of the second elastic shaft 39e of the side frame 34. The right end of the fourth elastic shaft 41 e is connected to the fourth joint J4 on the right side. Likewise, the left end of the fourth elastic shaft 41 e is connected to the fourth joint J4 on the left side. As a result, the two second elastic shafts 39e are connected together by means of the fourth elastic shaft 41 e.

As shown in FIG. 2, the side frame 34 extends upwardly from the rear of the saddle type vehicle 1, and further extends forwardly. The lower end of the side frame 34 is connected to the rear of the saddle type vehicle 1 behind the seat 3 by means of the rear connection portion 31. A portion (upper portion) of the side frame 34 is disposed above the seat 3.

As shown in FIG. 3, the side frame 34 forms a side edge (right side edge or left side edge) of the roof unit 27. The front cross frame 36 forms a front edge of the roof unit 27. The rear cross frame 35 is disposed at a more rearward position than the front cross frame 36. The front cross frame 36 and the rear cross frame 35 perpendicularly intersect the center WO in the width direction. The right side edge and the left side edge of the roof sheet 32 are connected to the pair of side frames 34, respectively. The front edge and the rear edge of the roof sheet 32 are connected to the front cross frame 36 and the rear cross frame 35, respectively.

As shown in FIG. 2, the roof unit 27 includes a roof rear portion 42 that extends upwardly from the rear of the saddle type vehicle 1, a roof corner portion 43 that has an arch-shaped configuration when the vehicle is viewed laterally and that extends forwardly from the roof rear portion 42, and a roof upper portion 44 that extends forwardly from the roof corner portion 43.

As shown in FIG. 2, the roof rear portion 42 is disposed at a more rearward position than the seat 3. The roof rear portion 42 is disposed behind a rider sitting on the seat 3(see FIG. 1). The lower end of the roof rear portion 42 is disposed above the grab frame 4. The roof rear portion 42 is connected to the grab frame 4 behind the seat 3 by means of the rear connection portion 31. The lower end of the roof rear portion 42 extends rearwardly and upwardly from the rear of the saddle type vehicle 1. The roof rear portion 42 has a V-shaped configuration that is opened forwardly when the vehicle is viewed laterally.

As shown in FIG. 5, the roof rear portion 42 extends upwardly from the rear of the saddle type vehicle 1 toward the outer side in the vehicle width direction. The roof rear portion 42 forms a portion (lower portion) of a right side edge 27R and a left side edge 27L of the roof unit 27. Therefore, the right side edge 27R and the left side edge 27L of the roof unit 27 extend upwardly from the rear of the saddle type vehicle 1 toward the outer side in the vehicle width direction. The width of the roof rear portion 42 becomes greater in proportion to receding from the rear of the saddle type vehicle 1. As shown in FIG. 3, the width of the upper end of the roof rear portion 42 is greater than the width of the seat 3. The width of the lower end of the roof rear portion 42 is smaller than the width of the seat 3.

As shown in FIG. 2, the roof corner portion 43 is formed in an arch shape that is opened forwardly and downwardly when the vehicle is viewed laterally. The lower end (rear end) of the roof corner portion 43 is disposed at a more rearward position than the seat 3. The upper end (front end) of the roof corner portion 43 is disposed at a more forward position than the rear end of the seat 3. As shown in FIG. 3, the width of the lower ends of the roof corner portions 43 is greater than the width of the seat 3. The width of the upper ends of the roof corner portions 43 is greater than the interval between the lower ends of the roof corner portions 43. The roof corner portions 43 are connected together by means of the rear cross frame 35.

As shown in FIG. 2, the roof upper portion 44 is disposed at a more forward position than the rear end of the seat 3. The roof upper portion 44 is disposed at a higher position than a rider sitting on the seat 3. The front end of the roof upper portion 44 is disposed at a more forward position than the head of the rider sitting on the seat 3 (see FIG. 1). The front end of the roof upper portion 44 is disposed at a more forward position than the rear end of the seat 3 and at a more rearward position than the handle 11. As shown in FIG. 3, the front end of the roof upper portion 44 is defined by the front cross frame 36. A right side edge and a left side edge of the roof upper portion 44 are disposed at a more outward position than the seat 3. Therefore, the width of the roof upper portion 44 is greater than the width of the seat 3.

As shown in FIG. 3, the roof frame 33 includes a pent-roof portion 45 located at a more forward position than the upper connection portion 30. The pent-roof portion 45 is a portion of the roof upper portion 44. The pent-roof portion 45 is the portion located at a more forward position than a main bracket 76 of the upper connection portion 30 described later. The pent-roof portion 45 is disposed at a more forward position than the upper end of the front unit 28. The upper connection portion 30 is connected to the roof upper portion 44. The upper connection portion 30 is disposed at a more rearward position than the front end of the roof upper portion 44. The upper connection portion 30 is disposed at a more rearward position than the front cross frame 36 and at a more forward position than the rear cross frame 35. The upper connection portion 30 connects the roof upper portion 44 and the front unit 28 together.

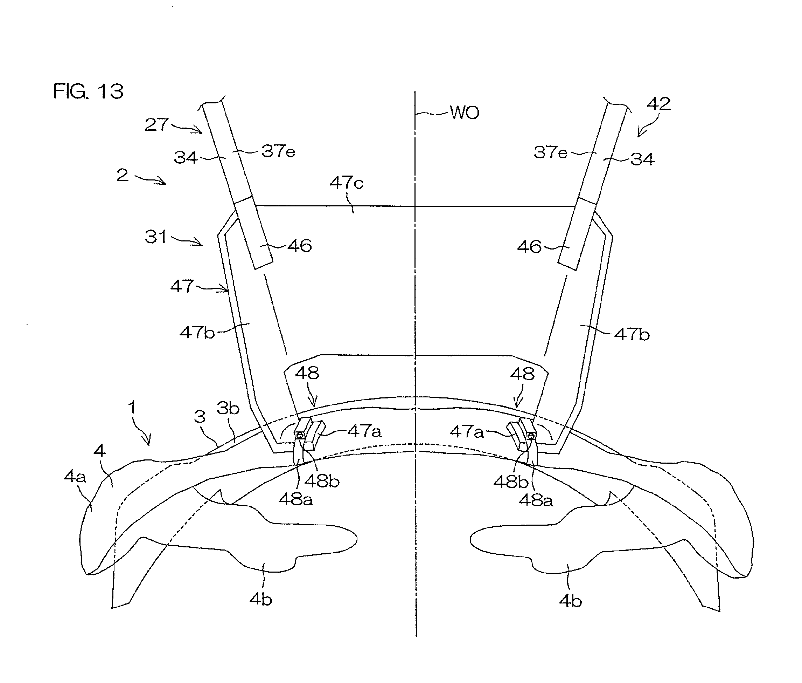

As shown in FIG. 13, the rear connection portion 31 includes two rear holders 46 that hold the roof unit 27, a rear bracket 47 that holds the rear holders 46, and two rear fixing members 48 that fix the rear bracket 47 to the grab frame 4. The roof apparatus 2 may have a back rest 49 (see FIG. 2) held by the rear bracket 47 in front of the rear bracket 47.

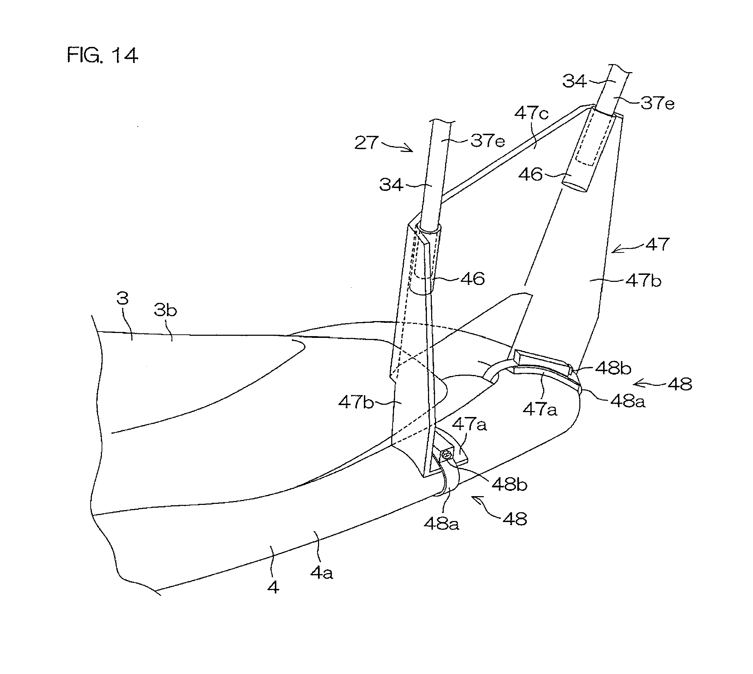

As shown in FIG. 14, the rear bracket 47 extends upwardly from the grab frame 4. The rear bracket 47 is disposed at a more rearward position than the seat 3. The rear bracket 47 overlaps with the center WO in the width direction. The rear bracket 47 includes two bottom wall portions 47a that are disposed on the grab frame 4, two sidewall portions 47b that extend upwardly from the two bottom wall portions 47a, and a front wall portion 47c that extends from one of the sidewall portions 47b to the other sidewall portion 47b.

As shown in FIG. 13, the two bottom wall portions 47a of the rear bracket 47 are spaced in the vehicle width direction. The two sidewall portions 47b of the rear bracket 47 extend upwardly from the outer ends of the two bottom wall portions 47a, respectively. The front wall portion 47c of the rear bracket 47 is disposed between the two sidewall portions 47b. The front wall portion 47c connects the front ends of the two sidewall portions 47b together. The front wall portion 47c is disposed at a higher position than the two bottom wall portions 47a. The front wall portion 47c is shorter than the sidewall portion 47b in the up-down direction. The front wall portion 47c is longer than the sidewall portion 47b in the vehicle width direction.

As shown in FIG. 14, the two rear fixing members 48 respectively fix the two bottom wall portions 47a of the rear bracket 47 to the grab frame 4. The rear fixing member 48 includes, for example, a tightening band 48a wound around the bottom wall portion 47a and around the grab frame 4 and an adjusting screw 48b that adjusts the tightening force of the tightening band 48a with respect to the bottom wall portion 47a and with respect to the grab frame 4 by adjusting the length of the tightening band 48a. The method of fixing the rear bracket 47 to the grab frame 4 is not limited to being fixed by the bands, and the rear bracket 47 may be fixed by bolts and nuts, or may be fixed by welding, or may be fixed by a method other than these methods.

As shown in FIG. 13, the two rear holders 46 are spaced in the vehicle width direction. The two rear holders 46 are disposed on the right side and on the left side of the center WO in the width direction, respectively. The two rear holders 46 are disposed at higher positions than the seat 3. The rear holder 46 is disposed behind the front wall portion 47c. The rear holder 46 is disposed between the two sidewall portions 47b in the vehicle width direction. The rear holder 46 is fixed to the rear holder 46 by means of, for example, welding. The rear holder 46 is, for example, cylindrical. The rear holder 46 extends obliquely upward toward the outer side in the vehicle width direction.

As shown in FIG. 13, the two first elastic shafts 37e of the roof unit 27 are inserted in the two rear holders 46, respectively. As a result, the lower end of the roof unit 27 is held by the two rear holders 46. The rear holder 46 is fixed to the rear bracket 47, and the rear bracket 47 is fixed to the grab frame 4. The grab frame 4 is fixed to the vehicle body frame 5. Therefore, the lower end of the roof unit 27 is fixed to the vehicle body frame 5 through the rear connection portion 31 and the grab frame 4. The roof unit 27 is thereby connected to the rear of the saddle type vehicle 1.

As shown in FIG. 2, the front unit 28 extends forwardly from the handle 11, and further extends rearwardly. The front unit 28 includes a front frame 50 that extends from the handle 11 to the roof unit 27 and a height adjustment mechanism 64 that changes a height from the seat 3 to the roof unit 27 by changing the height of the front frame 50.

As shown in FIG. 4, the front frame 50 includes a left-and-right pair of lower frames 51 that extend upwardly from the handle 11 toward the roof unit 27 and an upper frame 52 that extends downwardly from the roof unit 27 toward the pair of lower frames 51.

As shown in FIG. 4, the pair of lower frames 51 are spaced in the vehicle width direction. The lower end of the lower frame 51 is connected to the handle 11 by means of the front connection portion 29. The upper end of the lower frame 51 is connected to the lower end of the upper frame 52 by means of the height adjustment mechanism 64. The upper end of the upper frame 52 is connected to the roof unit 27 by means of the upper connection portion 30. The lower frame 51 and the height adjustment mechanism 64 are disposed at more forward positions than the seat 3.

As shown in FIG. 4, each lower frame 51 includes a lower main frame 54 that extends upwardly from the handle 11 toward the outer side in the vehicle width direction. Each lower frame 51 may additionally include an auxiliary frame 53 whose one end and whose opposite end are connected to the lower main frame 54. The lower main frame 54 and the auxiliary frame 53 are, for example, hard shafts made of hard material, such as iron, that is harder than resin.

As shown in FIG. 2, the lower main frame 54 includes a handle connection portion 55 supported by the front connection portion 29, a lower inclined portion 56 that extends forwardly and upwardly from the handle connection portion 55, an arch-shaped lower curved portion 57 that extends upwardly from the lower inclined portion 56, and a lower parallel portion 58 that extends rearwardly and upwardly from the lower curved portion 57.

As shown in FIG. 2, the lower inclined portion 56 of the lower main frame 54 is connected to the outer peripheral surface of the handle connection portion 55 at a lower position than the upper end of the handle connection portion 55. The handle connection portion 55 has a cylindrical shape extending upwardly from the front connection portion 29. The lower inclined portion 56 extends forwardly and upwardly from the handle connection portion 55. The upper end of the lower inclined portion 56 is disposed at a more forward position than the handle bar 13.

As shown in FIG. 4, the lower inclined portion 56 of the lower main frame 54 extends from the handle connection portion 55 toward the outer side in the vehicle width direction. The upper end of the lower inclined portion 56 is disposed at a more outward position in the vehicle width direction than the lower end of the lower inclined portion 56. Therefore, the interval between the upper ends of the two lower inclined portions 56 in the vehicle width direction is greater than the interval between the lower ends of the two lower inclined portions 56 in the vehicle width direction.

As shown in FIG. 2, the lower curved portion 57 of the lower main frame 54 is disposed at a more forward position than the handle bar 13. The lower curved portion 57 is disposed at a higher position than the handle bar 13. The lower curved portion 57 is formed in an arch shape that is opened rearwardly when the vehicle is viewed laterally. The lower curved portion 57 is disposed at a more forward position than the auxiliary frame 53. The lower end of the auxiliary frame 53 is connected to the lower main frame 54 at a lower position than the lower curved portion 57. The upper end of the auxiliary frame 53 is connected to the lower main frame 54 at a higher position than the lower curved portion 57.

As shown in FIG. 2, the lower parallel portion 58 of the lower main frame 54 extends rearwardly and upwardly from a more forward position than the handle bar 13 to a position higher than the handle bar 13. The lower parallel portion 58 is disposed at a more forward position than the seat 3 and the roof unit 27. The lower parallel portion 58 is disposed at a more forward position than the turn axis Ar and the rotational axis Ah. The lower parallel portion 58 is parallel to the rotational axis Ah when the vehicle is viewed laterally. As described above, the turn axis Ar is parallel to the rotational axis Ah (including a case in which the turn axis Ar is substantially parallel thereto). Therefore, the lower parallel portion 58 is parallel to both the turn axis Ar and the rotational axis Ah when the vehicle is viewed laterally.

As shown in FIG. 3, the two lower parallel portions 58 of the lower main frame 54 are parallel to each other. The two lower parallel portions 58 are spaced in the vehicle width direction. The two lower parallel portions 58 are disposed on the right side and on the left side of the center WO in the width direction, respectively. The two lower parallel portions 58 are disposed at more inward positions in the vehicle width direction than the right end and the left end of the handle bar 13. The two lower parallel portions 58 are disposed at more inward positions in the vehicle width direction than the mirror holding portions 16a of the two rearview mirrors 16. Each lower parallel portion 58 is disposed at a more outward position in the vehicle width direction than the seat 3. The interval between the two lower parallel portions 58 in the vehicle width direction is greater than the width of the seat 3.

As shown in FIG. 3, the upper frame 52 includes an upper main frame 60 having a V shape that is opened forwardly when the vehicle is viewed planarly and an upper bracket 59 that is connected to the upper connection portion 30. The upper main frame 60 is, for example, a hard shaft made of hard material, such as iron, that is harder than resin. The upper bracket 59 is fixed to the upper main frame 60 by means of, for example, welding.

As shown in FIG. 3, the upper main frame 60 includes two upper parallel portions 61 that extend rearwardly and upwardly from the lower parallel portions 58 of the two lower main frames 54, two upper inclined portions 62 that extend rearwardly and upwardly from the two upper parallel portions 61, and a connection portion 63 by which the upper ends of the two upper inclined portions 62 are connected together.

As shown in FIG. 3, the two upper parallel portions 61 of the upper main frame 60 are parallel to each other. As shown in FIG. 2, each upper parallel portion 61 is parallel to the turn axis Ar and the rotational axis Ah when the vehicle is viewed laterally in the same way as the lower parallel portion 58. The upper parallel portion 61 is shorter than the lower parallel portion 58. The upper parallel portion 61 and the lower parallel portion 58 are connected together by means of the height adjustment mechanism 64. The upper parallel portion 61 and the lower parallel portion 58 form a parallel portion of the front unit 28 parallel to the rotational axis Ah when the vehicle is viewed laterally. A height H1 from the handle bar 13 to the upper end of the parallel portion (the upper end of the upper parallel portion 61) is greater than a height H2 from the upper end of the parallel portion (the upper end of the upper parallel portion 61) to the upper connection portion 30.

As shown in FIG. 2, the upper inclined portion 62 of the upper main frame 60 obliquely inclines with respect to the turn axis Ar and the rotational axis Ah when the vehicle is viewed laterally. Therefore, the upper inclined portion 62 obliquely inclines with respect to the upper parallel portion 61 and the lower parallel portion 58. The upper inclined portion 62 is longer than the upper parallel portion 61. A height from the lower end of the upper inclined portion 62 to the upper end of the upper inclined portion 62 is greater than a height from the lower end of the upper parallel portion 61 to the upper end of the upper parallel portion 61.

As shown in FIG. 3, the upper inclined portion 62 of the upper main frame 60 extends upwardly from the upper parallel portion 61 toward the inner side in the vehicle width direction. The interval between the lower ends of the two upper inclined portions 62 in the vehicle width direction is greater than the interval between the upper ends of the two upper inclined portions 62 in the vehicle width direction. The connection portion 63 extends from the upper end of one of the upper inclined portions 62 to the upper end of the other upper inclined portion 62. The two upper inclined portions 62 form a portion (upper portion) of a right side edge 28R and a left side edge 28L of the front unit 28 along with the connection portion 63. The right side edge 28R and the left side edge 28L of the front unit 28 extend downwardly from the upper connection portion 30 toward the outer side in the vehicle width direction.

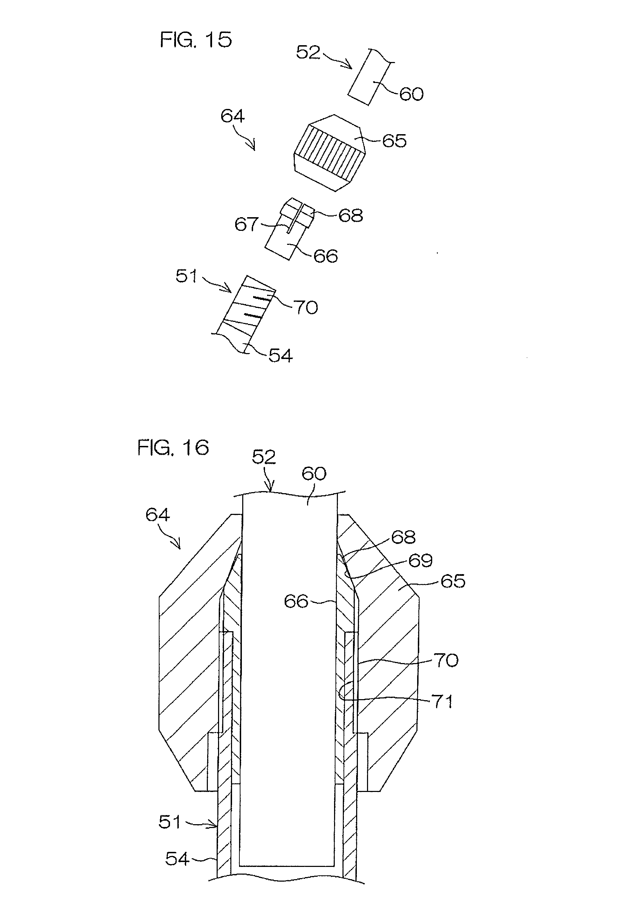

As shown in FIG. 16, the height adjustment mechanism 64 includes a cylindrical collet chuck 66 disposed around the upper main frame 60 and a lock nut 65 that is attached to a male screw portion 70 disposed at the lower main frame 54 and that presses the collet chuck 66 inwardly in the radial direction.

As shown in FIG. 16, a portion of the collet chuck 66 is inserted in the lower main frame 54. The upper main frame 60 is inserted in the collet chuck 66. The forward end (in FIG. 16, the upper end) of the collet chuck 66 protrudes upwardly from the upper end of the lower main frame 54. The lock nut 65 surrounds the forward end of the collet chuck 66. The lock nut 65 further surrounds an engagement portion between the collet chuck 66 and the lower main frame 54. The lock nut 65 is detachably attached to the lower main frame 54 by means of the male screw portion 70 and a female screw portion 71, and is pressed inwardly in the radial direction against an outer peripheral taper portion 68 disposed at the forward end of the collet chuck 66. The inner peripheral surface of the collet chuck 66 is pressed against the outer peripheral surface of the upper main frame 60 by means of a force transmitted from the lock nut 65. As a result, the upper main frame 60 is held by the collet chuck 66.

As shown in FIG. 15, the collet chuck 66 includes the annular outer peripheral taper portion 68 that becomes thinner toward the forward end (in FIG. 15, upper end) of the collet chuck 66 and a plurality of axial grooves 67 that extend in the axial direction of the collet chuck 66 from the forward end of the collet chuck 66. Each axial groove 67 is opened at an inner peripheral surface and at an outer peripheral surface of the collet chuck 66, and is opened at a forward end surface (in FIG. 15, upper surface) of the collet chuck 66. The axial grooves 67 are spaced in the circumferential direction of the collet chuck 66. The outer peripheral taper portion 68 is divided into pieces in the circumferential direction by the axial grooves 67. The inner peripheral surface of the collet chuck 66 is expandable and contractible in the radial direction of the collet chuck 66 by the elastic deformation of the outer peripheral taper portion 68.

As shown in FIG. 16, the lock nut 65 includes the cylindrical female screw portion 71 that is attached to the male screw portion 70 disposed at the outer periphery of the lower main frame 54 and a cylindrical inner peripheral taper portion 69 that is pressed against the outer peripheral taper portion 68 of the collet chuck 66. The female screw portion 71 and the inner peripheral taper portion 69 are disposed at the inner periphery of the lock nut 65. The inner peripheral taper portion 69 is disposed closer to a forward end of the lock nut 65 than the female screw portion 71 (i.e., an end that is closer to the upper main frame 60; upper end in FIG. 16). The inner peripheral taper portion 69 becomes thinner toward the forward end of the lock nut 65. The inner peripheral taper portion 69 is disposed around the outer peripheral taper portion 68 of the collet chuck 66. The female screw portion 71 is disposed around the male screw portion 70 of the lower main frame 54.

When the lock nut 65 is rotated in the clockwise direction with respect to the lower main frame 54 in a state in which the female screw portion 71 engages the male screw portion 70, the lock nut 65 moves in a direction (in FIG. 16, in the downward direction) toward the root of the male screw portion 70 from the forward end of the male screw portion 70. As a result, the outer peripheral taper portion 68 of the lock nut 65 is pressed against the inner peripheral taper portion 69 of the collet chuck 66, and the outer peripheral taper portion 68 is elastically deformed inwardly in the radial direction. Therefore, the inner diameter of the collet chuck 66 becomes smaller. On the other hand, when the lock nut 65 is rotated in the counterclockwise direction with respect to the lower main frame 54 in a state in which the female screw portion 71 engages the male screw portion 70, a force with which the inner peripheral taper portion 69 presses the outer peripheral taper portion 68 inwardly in the radial direction becomes weak, and the outer peripheral taper portion 68 moves outwardly in the radial direction by an elastic restoring force. Therefore, the inner diameter of the collet chuck 66 becomes larger.

When the height of the front frame 50 is changed, the lock nut 65 is loosened (i.e., is rotated in the counterclockwise direction). As a result, the maintaining force of the upper main frame 60 by means of the collet chuck 66 becomes weak, and the upper main frame 60 becomes movable with respect to the collet chuck 66 in the axial direction of the collet chuck 66. Therefore, when a user lifts or depresses the upper main frame 60 in this state, the upper main frame 60 moves with respect to the lower main frame 54 in the axial direction of the collet chuck 66. Therefore, the upper frame 52 moves with respect to the lower frame 51, and the height of the front frame 50 changes. Thereafter, when the lock nut 65 is tightened (i.e., is rotated in the clockwise direction) after adjusting the height of the front frame 50, the maintaining force of the upper main frame 60 by means of the collet chuck 66 becomes great, and the upper main frame 60 is fixed to the collet chuck 66. As a result, the height of the front frame 50 is kept at a height fixed by making an adjustment.

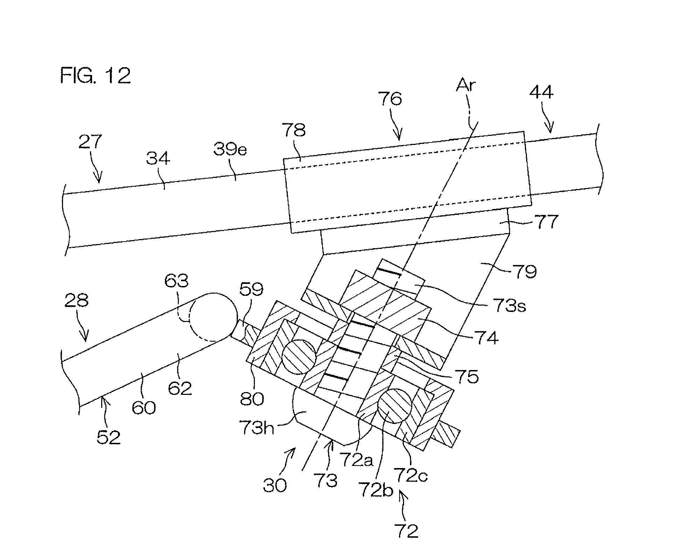

As shown in FIG. 12, the upper connection portion 30 includes a rolling bearing 72 disposed on the turn axis Ar and a turnable shaft 73 held by the rolling bearing 72. The upper connection portion 30 additionally includes a nut 74 attached to the male screw portion disposed at the outer periphery of the turnable shaft 73 and the main bracket 76 that holds the rolling bearing 72 through the nut 74 and the turnable shaft 73. The upper connection portion 30 may include an annular spacer 75 that is interposed between the rolling bearing 72 and the main bracket 76.

As shown in FIG. 12, the rolling bearing 72 includes an inner ring 72a that coaxially surrounds the turn axis Ar, an outer ring 72c that coaxially surrounds the inner ring 72a, and a plurality of rolling elements 72b disposed between the inner ring 72a and the outer ring 72c. The rolling element 72b may be a ball or a roller. FIG. 12 shows an example in which the rolling element 72b is a ball. The inner ring 72a and the outer ring 72c are connected together through the rolling elements 72b relatively rotatably around the turn axis Ar.

As shown in FIG. 12, the inner ring 72a is fixed to one of the roof unit 27 and the front unit 28, and the outer ring 72c is fixed to the other one of the roof unit 27 and the front unit 28. FIG. 12 shows an example in which the inner ring 72a is fixed to the roof unit 27, whereas the outer ring 72c is fixed to the front unit 28. In this example, the outer ring 72c is fitted into a cylindrical outer-ring holding portion 80 disposed at the upper bracket 59 of the front unit 28. The outer ring 72c is fixed to the outer-ring holding portion 80 by, for example, press fitting. On the other hand, the inner ring 72a is fixed to the main bracket 76 through the turnable shaft 73 and the nut 74. The inner ring 72a may be fixed to the front unit 28 without being limited to the roof unit 27. If so, the outer ring 72c will be fixed to the roof unit 27.

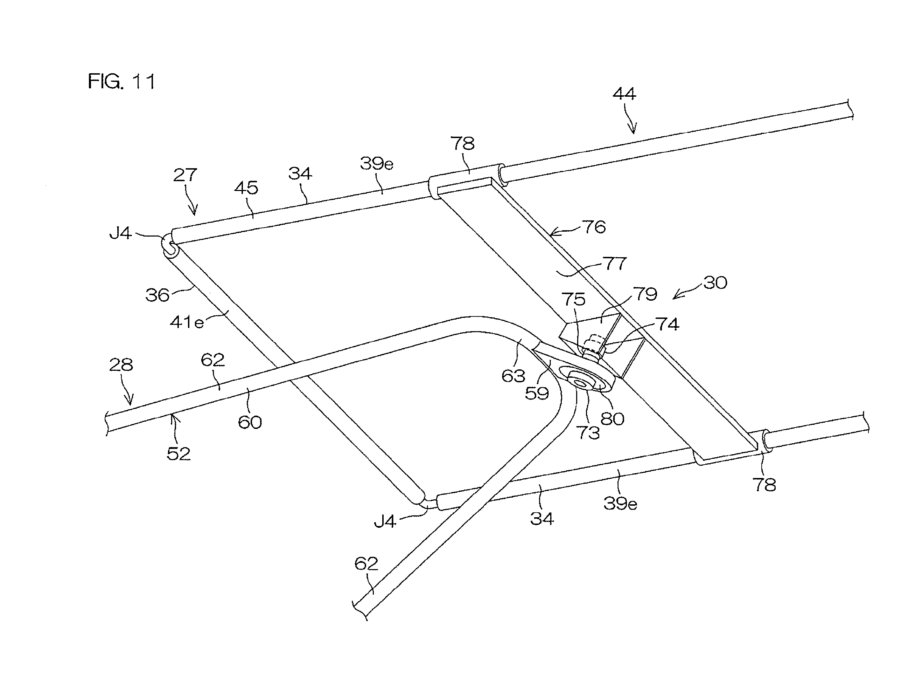

As shown in FIG. 11, the main bracket 76 is disposed at a more rearward position than the front edge of the roof unit 27 (the front edge of the pent-roof portion 45). The roof sheet 32 of the roof unit 27 is disposed above the main bracket 76 (see FIG. 2). The main bracket 76 includes a plate portion 77 that extends in the vehicle width direction, two shaft connection portions 78 fixed to both ends of the plate portion 77, respectively, and an inner-ring holding portion 79 that extends downwardly from the plate portion 77.

As shown in FIG. 11, the plate portion 77 of the main bracket 76 has a rectangular shape that extends in the vehicle width direction. The plate portion 77 extends from one of the shaft connection portions 78 to the other shaft connection portion 78. The two shaft connection portions 78 are connected to the two side frames 34 of the roof unit 27, respectively. The shaft connection portion 78 is, for example, cylindrical. The side frame 34 is inserted in the shaft connection portion 78. The side frame 34 is held by the shaft connection portion 78 at a predetermined position, for example, by means of contact between the outer peripheral surface of the side frame 34 and the inner peripheral surface of the shaft connection portion 78. Therefore, the main bracket 76 is restrained from turning around the turn axis Ar with respect to the roof unit 27.

As shown in FIG. 11, the inner-ring holding portion 79 of the main bracket 76 is disposed below the plate portion 77. The inner-ring holding portion 79 is disposed at a more inward position in the vehicle width direction than the two shaft connection portions 78. The inner-ring holding portion 79 overlaps with the center WO in the width direction when the vehicle is viewed planarly (see FIG. 3). The inner-ring holding portion 79 has the shape of the letter U that is opened upwardly. The inner-ring holding portion 79 includes a pair of side walls that face each other in the vehicle width direction with an interval therebetween and a bottom wall by which lower ends of the pair of side walls are connected together. As shown in FIG. 12, the bottom wall of the inner-ring holding portion 79 is formed in a plate shape perpendicular to the turn axis Ar. The nut 74 is disposed between the plate portion 77 and the bottom wall of the inner-ring holding portion 79 in the up-down direction.

As shown in FIG. 11, the center line of the turnable shaft 73 is disposed on the turn axis Ar. The turnable shaft 73 is, for example, a bolt. The turnable shaft 73 includes a shaft portion 73s that extends along the turn axis Ar and a head portion 73h joined to an end of the shaft portion 73s. The outer diameter of the head portion 73h is greater than the outer diameter of the shaft portion 73s. The shaft portion 73s is inserted in the inner ring 72a, and the head portion 73h is disposed below the inner ring 72a. The shaft portion 73s passes through the inner ring 72a. The spacer 75 surrounds the shaft portion 73s above the inner ring 72a. The shaft portion 73s passes through a through hole formed in the bottom wall of the inner-ring holding portion 79, and protrudes upwardly from the bottom wall of the inner-ring holding portion 79. The nut 74 is attached to a projection portion of the shaft portion 73s that protrudes upwardly from the bottom wall of the inner-ring holding portion 79. The inner ring 72a, the spacer 75, and the inner-ring holding portion 79 are tightened by the nut 74 and by the head portion 73h of the turnable shaft 73 in the axial direction of the turnable shaft 73. As a result, the inner ring 72a is fixed to the main bracket 76. Likewise, the turnable shaft 73, the nut 74, and the spacer 75 are fixed to the main bracket 76.

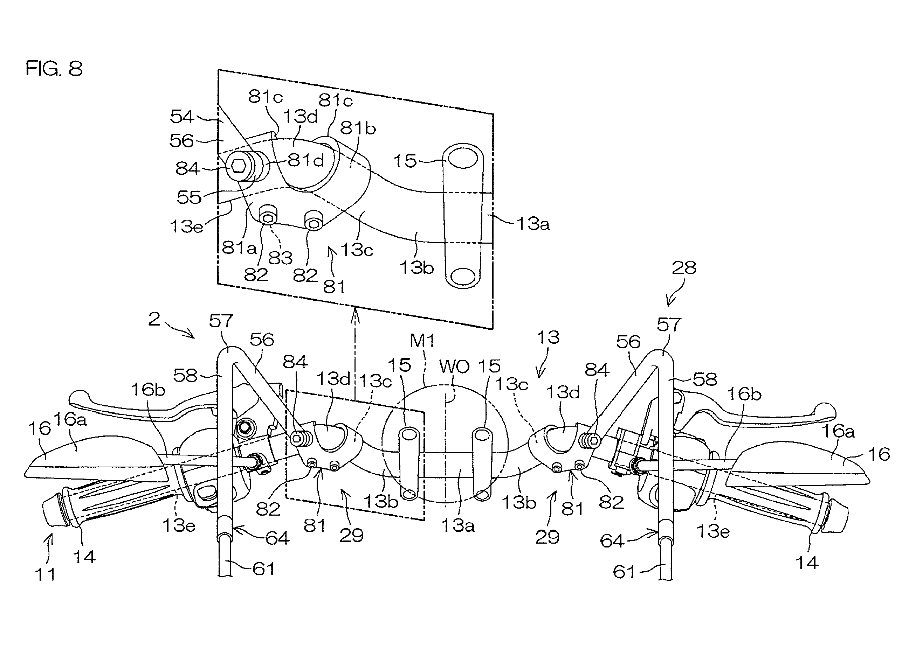

As shown in FIG. 8, the front connection portion 29 includes a cross-sectionally U-shaped front bracket 81 that grasps the handle bar 13, two pairs of base bolts 82 and base nuts 83 that press the inner surface of the front bracket 81 against the outer peripheral surface of the handle bar 13, and a connection bolt 84 that connects the front bracket 81 to the front unit 28.

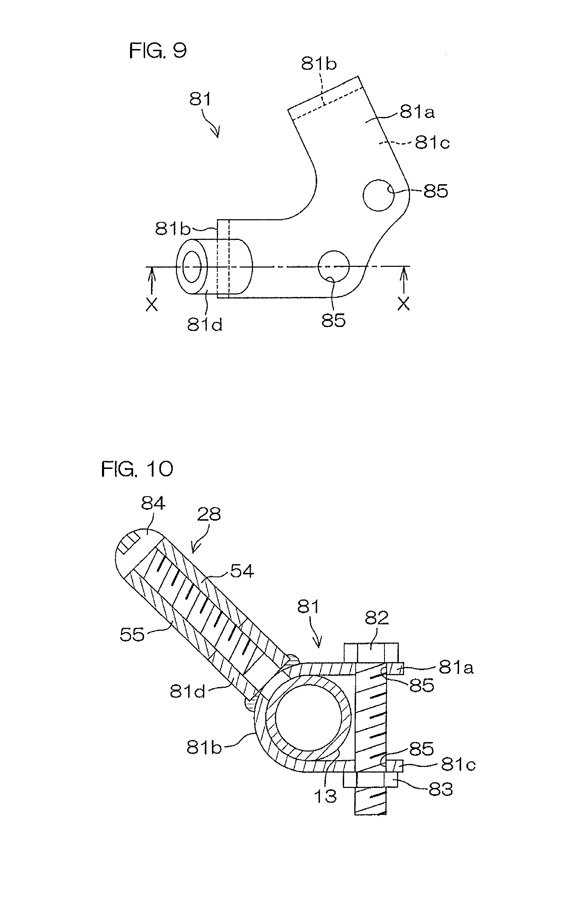

As shown in FIG. 10, the handle bar 13 is made of a cylindrical pipe. As shown in FIG. 8, the handle bar 13 includes a central portion 13a that overlaps with the center WO in the width direction, two inner curved portions 13b disposed on the right side and on the left side of the central portion 13a respectively, and two intermediate portions 13c disposed on the right side and on the left side of the two inner curved portions 13b respectively. The handle bar 13 additionally includes two outer curved portions 13d disposed on the right side and on the left side of the two intermediate portions 13c respectively and two outer end portions 13e disposed on the right side and on the left side of the two outer curved portions 13d respectively.

As shown in FIG. 8, the central portion 13a, the intermediate portion 13c, and the outer end portion 13e of the handle bar 13 are all linear. As shown as an enlarged view in FIG. 8, the inner curved portion 13b is formed in an arch shape that is opened forwardly when the vehicle is viewed planarly, and the outer curved portion 13d is formed in an arch shape that is opened rearwardly when the vehicle is viewed planarly. The inner curved portion 13b extends from the outer end of the central portion 13a to the inner end of the intermediate portion 13c, and the outer curved portion 13d extends from the outer end of the intermediate portion 13c to the inner end of the outer end portion 13e. The central portion 13a perpendicularly intersects the center WO in the width direction, and the intermediate portion 13c and the outer end portion 13e obliquely incline with respect to the center WO in the width direction. The intermediate portion 13c extends forwardly and outwardly from the inner curved portion 13b when the vehicle is viewed planarly, and the outer end portion 13e extends rearwardly and outwardly from the outer curved portion 13d when the vehicle is viewed planarly.

As shown in FIG. 8, the two front brackets 81 are disposed on the right side and on the left side of the handle holder 15 respectively. As shown in FIG. 9, the front bracket 81 includes an upper plate 81 a disposed above the handle bar 13. The upper plate 81 a is formed in a V shape, and includes two forward end portions (i.e., portions to which a front plate 81 b is connected) and one root portion (i.e., a portion in which a bolt insertion hole 85 is formed). As shown in FIG. 10, the front bracket 81 additionally includes a lower plate 81c disposed below the handle bar 13. The lower plate 81 c has the same V shape as the upper plate 81 a, and faces the upper plate 81 a in a posture parallel to the upper plate 81 a, not shown. The front bracket 81 includes the two front plates 81 b by which the forward end of the upper plate 81 a and the forward end of the lower plate 81 c are connected together. The handle bar 13 is disposed in a U-shaped space defined by the upper plate 81 a, the lower plate 81 c, and the front plate 81 b.

As shown in FIG. 8, the two front brackets 81 are disposed on the right side and on the left side of the meter M1, respectively, when the vehicle is viewed planarly. Therefore, the interval between the two front brackets 81 in the vehicle width direction is greater than the width (the length in the vehicle width direction) of the meter M1. The right end and the left end of the meter M1 are disposed at more outward positions in the vehicle width direction than the handle holder 15. The width of the meter M1 is greater than the interval between the two handle holders 15 in the vehicle width direction. The front unit 28 is connected to the handle 11 between the meter M1 and the grip 14 in the vehicle width direction.

As shown in FIG. 10, the base bolt 82 is inserted in the bolt insertion hole 85 formed in the upper plate 81 a and the lower plate 81c. The shaft portion of the base bolt 82 passes through the front bracket 81, and protrudes from the outer surface of the front bracket 81. The base nut 83 is attached to a projection portion of the base bolt 82 that protrudes from the front bracket 81. The root portion of the upper and lower plates 81 a and 81c (the end opposite to the front plate 81 b) is tightened by the base nut 83 and by the head portion of the base bolt 82 in the axial direction of the base bolt 82. Thereby, the front bracket 81 is elastically deformed, and the inner surface of the front bracket 81 is pressed against the outer peripheral surface of the handle bar 13. As a result, the front bracket 81 is fixed to the handle bar 13.

As shown in FIG. 10, the connection bolt 84 is attached to a pedestal portion 81d of the front bracket 81 through the cylindrical handle connection portion 55 of the front unit 28. The pedestal portion 81d of the front bracket 81 is fixed to the upper plate 81a of the front bracket 81 by, for example, welding. The pedestal portion 81d has a cylindrical shape that protrudes from the outer surface of the upper plate 81a. The pedestal portion 81 d includes an inner peripheral surface at which a female screw portion in which a male screw portion of the connection bolt 84 is inserted is disposed. The handle connection portion 55 of the front unit 28 is disposed on the pedestal portion 81 d. A shaft portion of the connection bolt 84 is inserted in the handle connection portion 55, and protrudes downwardly from the handle connection portion 55. The forward end of the connection bolt 84 that protrudes from the handle connection portion 55 is attached to the female screw portion of the pedestal portion 81 d. The handle connection portion 55 is tightened by the pedestal portion 81 d and by the head portion of the connection bolt 84 in the axial direction of the pedestal portion 81 d and in the axial direction of the connection bolt 84. Thereby, the front unit 28 is fixed to the front bracket 81. As a result, the front unit 28 is connected to the handle 11.

As shown in FIG. 8, the front bracket 81 is connected to the outer curved portion 13d of the handle bar 13. The outer curved portion 13d of the handle bar 13 is disposed between the central portion 13a of the handle bar 13 and the outer end portion 13e of the handle bar 13 in the vehicle width direction. The handle holder 15 is attached to the central portion 13a of the handle bar 13. The grip 14 is attached to the outer end portion 13e of the handle bar 13. Therefore, the front unit 28 is connected to the handle 11 between the handle holder 15 and the grip 14 in the vehicle width direction.

As described above, the roof unit 27 is connected to the saddle type vehicle 1, and the front unit 28 is connected to the handle 11. The upper connection portion 30 connects the roof unit 27 and the front unit 28 together so that the front unit 28 is turnable rightwardly and leftwardly around the turn axis Ar with respect to the roof unit 27. Therefore, when the handle 11 is turned, the handle 11 and the front unit 28 turn rightwardly and leftwardly with respect to the roof unit 27.

The handle 11 is turnable between the rightward maximum steering position and the leftward maximum steering position with the straight-traveling position (position shown in FIG. 3) as a center. When the handle 11 is turned leftwardly (i.e., when the handle 11 is turned in the counterclockwise direction), the right end of the upper portion of the front unit 28 moves forwardly around the turn axis Ar while following a circular-arc track. Likewise, when the handle 11 is turned rightwardly (i.e., when the handle 11 is turned in the clockwise direction), the left end of the upper portion of the front unit 28 moves forwardly around the turn axis Ar while following a circular-arc track.

The right end and the left end of the upper portion of the front unit 28 move within a horizontal plane if the turn axis Ar of the front unit 28 with respect to the roof unit 27 is vertical. However, the turn axis Ar of the front unit 28 with respect to the roof unit 27 extends rearwardly and upwardly, and inclines forwardly and rearwardly. Therefore, as shown in FIG. 27, the right end of the upper portion of the front unit 28 moves not only forwardly but also upwardly when the handle 11 is turned leftwardly. Likewise, when the handle 11 is turned rightwardly, the left end of the upper portion of the front unit 28 moves not only forwardly but also upwardly.

The front unit 28 extends from the handle 11 to the roof unit 27. The upper end of the front unit 28 is disposed below the roof unit 27. Therefore, the front unit 28 is made smaller in size in the up-down direction than when the upper end of the front unit 28 is disposed at a higher position than the roof unit 27. On the other hand, the turn axis Ar of the front unit 28 with respect to the roof unit 27 inclines forwardly and rearwardly, and therefore the right end or the left end of the upper portion of the front unit 28 approaches the roof unit 27 when the handle 11 is turned.

The front unit 28 is formed so as not to interfere with the roof unit 27 when the steering angle of the handle 11 changes from the minimum to the maximum, i.e., when the handle 11 is turned from the straight-traveling position to the rightward maximum steering position or to the leftward maximum steering position. More specifically, the front unit 28 is formed in a shape in which the movement locus drawn by the outer edge of the front unit 28 does not pass through the roof unit 27 when the steering angle of the handle 11 changes from the minimum to the maximum.

For example, the whole of the front unit 28 is disposed at a lower position than the roof unit 27 (see FIG. 2 and FIG. 4) when the steering angle of the handle 11 is the minimum. Additionally, the whole of the front unit 28 is disposed at a lower position than the roof unit 27 (see FIG. 6 and FIG. 7) when the steering angle of the handle 11 is the maximum. Therefore, the whole of the front unit 28 is disposed at a lower position than the roof unit 27 even when the handle 11 has either one of the steering angles. Therefore, the front unit 28 does not interfere with the roof unit 27 even when the front unit 28 is turned together with the handle 11.

If the shape is formed so that the front unit 28 does not interfere with the roof unit 27, the whole of the front unit 28 is not necessarily required to be disposed at a lower position than the roof unit 27. For example, a portion of the front unit 28 may be extended to a height equal to or greater than the roof unit 27 while making a detour via the roof unit 27.

As described above, in the first preferred embodiment, the front unit 28 is connected to the handle 11, and therefore interference between the handle 11 and the front unit 28 can be avoided. Additionally, the front unit 28 can be made smaller in size in the front-rear direction than in an arrangement in which the front unit 28 is connected to the front cover 23. This makes it possible to restrain an increase in the load applied to the handle 11, and makes it possible to make the comfort of a rider greater than when a front unit large in the front-rear direction is connected to the handle 11. Additionally, the front unit 28 is reduced in size, and therefore the front unit 28 can be lightened, and the moment of inertia of the front unit 28 can be lessened. Therefore, the load applied to the handle 11 can be further restrained.

Additionally, the turn axis Ar of the turnable shaft 73 of the upper connection portion 30 extends rearwardly and upwardly, and inclines forwardly and rearwardly in the same way as the rotational axis Ah of the handle 11. In other words, the turn axis Ar of the front unit 28 with respect to the roof unit 27 inclines forwardly and rearwardly in the same way as the rotational axis Ah of the handle 11. Therefore, the load transmitted from the front unit 28 to the handle 11 can be made smaller than when the turn axis Ar of the turnable shaft 73 is vertical. This makes it possible to further restrain an increase in the load applied to the handle 11.

As described above, the front unit 28 turns rightwardly and leftwardly together with the handle 11. The upper portion of the front unit 28 moves within a horizontal plane when the turn axis Ar of the front unit 28 with respect to the roof unit 27 is vertical. On the other hand, when the turn axis Ar of the front unit 28 with respect to the roof unit 27 inclines forwardly and rearwardly, the right end and the left end of the upper portion of the front unit 28 move not only in the front-rear direction but also in the up-down direction when the handle 11 is turned.

More specifically, as shown in FIG. 27, the left end of the upper portion of the front unit 28 moves rearwardly, and the right end of the upper portion of the front unit 28 moves forwardly when the handle 11 is turned leftwardly. The turn axis Ar of the turnable shaft 73 inclines forwardly and rearwardly, and therefore, at this time, the left end of the upper portion of the front unit 28 moves not only rearwardly but also downwardly, and the right end of the upper portion of the front unit 28 moves not only forwardly but also upwardly. The upper portion of the front unit 28 performs an movement opposite to this when the handle 11 is turned rightwardly.

The turn axis Ar of the turnable shaft 73 extends rearwardly and upwardly in this way, and therefore the right end and the left end of the upper portion of the front unit 28 move not only in the front-rear direction but also in the up-down direction when the handle 11 is turned. Therefore, there is a possibility that a portion of the front unit 28 will interfere with the roof unit 27 when the handle 11 is turned.

However, the front unit 28 is formed so as not to interfere with the roof unit 27 when the steering angle of the handle 11 is changed from the minimum to the maximum. In other words, the front unit 28 does not interfere with the roof unit 27 even when the handle 11 has either one of the steering angles. Therefore, it is possible to improve the comfort of a rider, as mentioned above, while preventing the interference between the roof unit 27 and the front unit 28.

Additionally, the front unit 28 is formed to have such a size as not to interfere with the roof unit 27 even when the handle 11 has any steering angle. In other words, the front unit 28 is reduced in size so as not to interfere with the roof unit 27 even when the handle 11 has any steering angle. Therefore, it is possible to restrict the load applied to the handle 11 from the front unit 28 when the handle 11 is turned. Therefore, it is possible to restrict the load applied to a rider from the handle 11. As a result, the comfort of the rider can be further improved.

Additionally, in the first preferred embodiment, the position between the meter M1 and the grip 14 in the vehicle width direction is used as a connection position between the front unit 28 and the handle 11. Therefore, neither the meter M1 nor the grip 14 interferes with the front unit 28. Additionally, the front unit 28 is connected to the handle 11 at a more inward position in the vehicle width direction than the grip 14, and therefore the front unit 28 can be made smaller in size than when the front unit 28 is connected to the handle 11 at a more outward position in the vehicle width direction than the grip 14. Therefore, it is possible to restrain an increase in the load applied to the handle 11. Moreover, the front unit 28 is connected to the handle 11 at a more outward position in the vehicle width direction than the meter M1 of the saddle type vehicle 1, and the handle 11 supports the lower end of the front unit 28 with a somewhat wide interval, and therefore the supporting rigidity of the front unit 28 by means of the handle 11 can be raised while securing the visibility of the meter M1.

Additionally, in the first preferred embodiment, the position between the handle holder 15 and the grip 14 in the vehicle width direction is used as a connection position between the front unit 28 and the handle 11. Therefore, the attachment of the handle holder 15 to the handle bar 13 or the attachment of the grip 14 to the handle bar 13 is not obstructed by the front unit 28. Additionally, the front unit 28 is connected to the handle bar 13 at a more inward position in the vehicle width direction than the grip 14, and therefore the front unit 28 can be made smaller in size than when the front unit 28 is connected to the handle bar 13 at a more outward position in the vehicle width direction than the grip 14. Therefore, the front unit 28 can be lightened, and the moment of inertia of the front unit 28 can be lessened. As a result, an increase in the load applied to the handle 11 is restrained. Moreover, the front unit 28 is connected to the handle bar 13 at a more outward position in the vehicle width direction than the handle holder 15, and the handle bar 13 supports the lower end of the front unit 28 with a somewhat wide interval, and therefore the supporting rigidity of the front unit 28 by means of the handle bar 13 can be raised.

Additionally, in the first preferred embodiment, the front unit 28 is connected to the outer curved portion 13d of the handle bar 13. Therefore, the handle bar 13 can support the lower end of the front unit 28 with a wider interval than when the front unit 28 is connected to the handle bar 13 at a more inward position in the vehicle width direction than the outer curved portion 13d of the handle bar 13. Therefore, the supporting rigidity of the front unit 28 by means of the handle bar 13 can be raised. Additionally, the lower end of the front unit 28 can be made smaller in size in the vehicle width direction than when the front unit 28 is connected to the handle bar 13 at a more outward position in the vehicle width direction than the outer curved portion 13d of the handle bar 13. As a result, the front unit 28 can be lightened, and the moment of inertia of the front unit 28 can be lessened. Therefore, it is possible to restrict the load applied to the handle 11.

Additionally, in the first preferred embodiment, the right side edge 28R of the front unit 28 extends downwardly toward the right side from the upper connection portion 30, and the left side edge 28L of the front unit 28 extends downwardly toward the left side from the upper connection portion 30. In other words, the interval between the right side edge 28R and the left side edge 28L of the front unit 28 becomes narrower in proportion to an approach to the upper connection portion 30. Therefore, the upper portion of the front unit 28 is reduced in size. Therefore, the front unit 28 can be lightened. As a result, an increase in the load applied to the handle 11 is restrained. Additionally, it is easy to prevent the interference between the roof unit 27 and the front unit 28 because the upper portion of the front unit 28 is reduced in size.

Additionally, in the first preferred embodiment, a portion (the pent-roof portion 45) of the roof unit 27 is disposed at a more forward position than the upper connection portion 30. In other words, the front unit 28 does not interfere with the roof unit 27 even when the handle 11 has any steering angle, and therefore the roof unit 27 can be extended to a more forward position than the upper connection portion 30. As a result, the front end of the roof unit 27 moves forwardly. Rain, dust, etc., mainly fall obliquely toward the saddle type vehicle 1 from a diagonally upward and forward position with respect to the saddle type vehicle 1 while the saddle type vehicle 1 is traveling. Therefore, rain, etc., can be blocked more certainly by moving the front end of the roof unit 27 forwardly. Therefore, it is difficult for rain, etc., to strike a rider. As a result, the comfort of the rider can be improved.

Additionally, in the first preferred embodiment, the front unit 28 is supported by the rolling bearing 72 of the upper connection portion 30 turnably around the turn axis Ar. As a result, the roof unit 27 and the front unit 28 are connected together through the rolling bearing 72 turnably around the turn axis Ar. Therefore, the front unit 28 turns smoothly around the turn axis Ar with respect to the roof unit 27. As a result, an increase in the load of the handle 11 is restrained.

Additionally, in the first preferred embodiment, the front unit 28 extends forwardly from the handle 11, and further extends upwardly toward the roof unit 27. The front unit 28 extends forwardly from the handle 11, and therefore the interval between the front unit 28 and the handle 11 in the front-rear direction can be widened. This makes it possible for a rider to easily move the hands of the rider without being hindered by the front unit 28. Additionally, a space in which existing components, such as wires or hoses, are disposed can be secured between the front unit 28 and the handle 11, and therefore these components are not required to be moved to other places.

Additionally, in the first preferred embodiment, the parallel portions of the front unit 28 (i.e., the lower parallel portion 58 and the upper parallel portion 61) are parallel to the rotational axis Ah of the handle 11 of the roof apparatus 2 when viewed laterally. Additionally, the upper inclined portion 62 of the front unit 28 obliquely inclines with respect to the parallel portions when the roof apparatus 2 is viewed laterally, and extends upwardly from the parallel portions. This makes it possible to secure a space between the rider and the front unit 28 in the front-rear direction. Therefore, a feeling of oppression given to the rider by the front unit 28 is reduced. This makes it possible to improve the comfort of the rider while reducing the front unit 28 in size. Additionally, the front unit 28 can be lightened, and the moment of inertia of the front unit 28 can be lessened because the front unit 28 is reduced in size. This makes it possible to restrain an increase in the load applied to the handle 11.

Additionally, in the first preferred embodiment, the upper ends of the parallel portions of the front unit 28 (i.e., the lower parallel portion 58 and the upper parallel portion 61) are disposed at high positions. In more detail, as shown in FIG. 2, the height H1 from the handle 11 to the upper end of the upper parallel portion 61 is greater than the height H2 from the upper end of the upper parallel portion 61 to the upper connection portion 30. The parallel portions of the front unit 28 are parallel to the rotational axis Ah of the handle 11 when the vehicle is viewed laterally. The front unit 28 can be reduced in size while making it difficult for the front unit 28 to come into rider's field of vision by securing the height of the parallel portions of the front unit 28. The front unit 28 is thus reduced in size, and therefore an increase in the load applied to the handle 11 is restrained. Additionally, it is difficult for the front unit 28 to come into rider's field of vision, and therefore the comfort of the rider can be raised.

Additionally, in the first preferred embodiment, the height of the front unit 28 is increased and decreased by the height adjustment mechanism 64. The roof unit 27 is supported by the front unit 28 through the upper connection portion 30. The height of the roof unit 27 also increases and decreases when the height of the front unit 28 increases and decreases. Therefore, the height from the seat 3 to the roof unit 27 can be changed by changing the height of the front unit 28. This makes it possible to place the roof unit 27 at an optimal height corresponding to the seated height of the rider. Therefore, the rider can be more certainly protected from rain, etc., and the comfort of the rider can be improved. Additionally, the roof apparatus 2 can be reduced in size because there is no need to place the roof unit 27 at an unnecessarily high position. This makes it possible to restrain an increase in the load applied to the handle 11.

Additionally, in the first preferred embodiment, the roof unit 27 is connected to the rear of the saddle type vehicle 1 behind the seat 3, and therefore the riding space S1 for the rider can be made wider rearwardly than when the roof unit 27 is connected to the rear of the saddle type vehicle 1 beside the seat 3. This makes it possible to improve the comfort of the rider. Additionally, the interval between the right side edge 27R and the left side edge 27L of the roof unit 27 becomes greater in proportion to receding from the rear of the saddle type vehicle 1 upwardly, and therefore the width with which the head of the rider is covered can be secured. Therefore, the roof function can be secured while reducing the roof apparatus 2 in size. Therefore, the roof function can be secured while restraining an increase in the load applied to the handle 11.

Additionally, in the first preferred embodiment, the saddle type vehicle 1 is provided with the grab frame 4 grasped by a user of the saddle type vehicle 1. At least one portion of the grab frame 4 is disposed behind the seat 3 when the vehicle is viewed planarly. The roof unit 27 is connected to the grab frame 4. Therefore, the roof unit 27 can be made smaller in size in the up-down direction than when the roof unit 27 is connected directly to the vehicle body frame 5. This makes it possible to lighten the roof unit 27. Additionally, the grab frame 4 protrudes from the vehicle body cover, such as the rear cover 26, and is exposed from the vehicle body cover behind the seat 3, and therefore the attachment of the roof unit 27 to the saddle type vehicle 1 can be performed more easily than when the roof unit 27 is connected to the vehicle body frame 5.

Additionally, in the first preferred embodiment, the roof apparatus 2 is attached to the saddle type vehicle 1 such that the roof unit 27 extends rearwardly and upwardly from the rear of the saddle type vehicle 1. The roof unit 27 thus extends rearwardly from the rear of the saddle type vehicle 1, and therefore the riding space S1 for the rider can be widened rearwardly. This makes it possible to improve the comfort of the rider while reducing the roof apparatus 2 in size.

Additionally, in the first preferred embodiment, at least one portion of the roof unit 27 is elastically deformable, and therefore it is possible to absorb errors in assembly or variations in dimensions of the roof unit 27. Additionally, the roof unit 27 is elastically deformable, and therefore the degree of freedom of the shape of the roof unit 27 rises. Therefore, the riding space S1 for the rider can be further widened, and the comfort of the rider can be improved.

Additionally, in the first preferred embodiment, the roof unit 27 is provided with a left-and-right pair of frames (the pair of side frames 34) spaced in the vehicle width direction, and the front unit 28 is provided with a left-and-right pair of frames (the pair of lower frames 51) spaced in the vehicle width direction. Therefore, the roof unit 27 and the front unit 28 are formed of the frames. When the roof unit 27 is formed of a panel continuous from the right side edge of the roof unit 27 to the left side edge of the roof unit 27, the weight of the roof unit 27 is liable to become greater than when the roof unit 27 is formed of the frames. Therefore, the roof apparatus 2 can be lightened by forming the roof unit 27 and the front unit 28 of the frames. This makes it possible to restrain an increase in the load applied to the handle 11.

### Second Preferred Embodiment

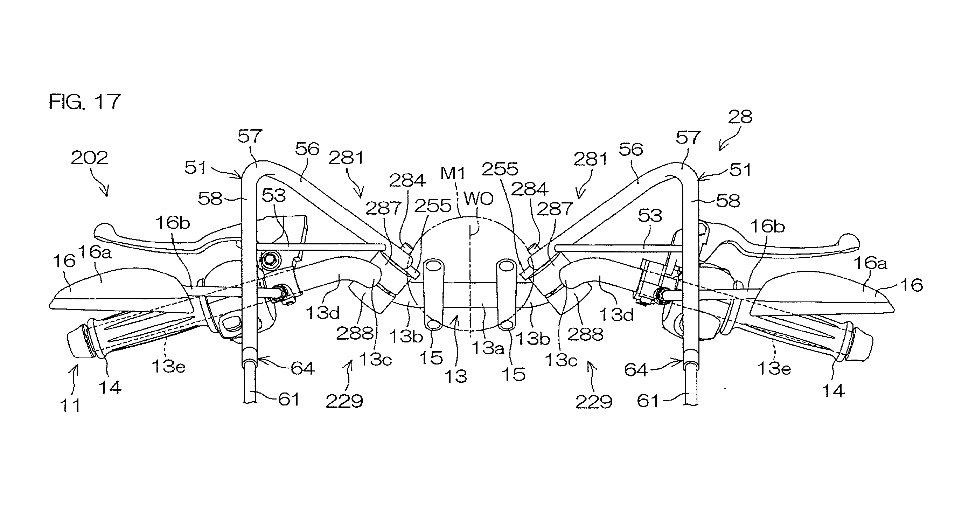

Next, a second preferred embodiment will be described. In FIG. 17 to FIG. 19 below, the same reference sign as in FIG. 1 to FIG. 16 is given to a component equivalent to each component shown in FIG. 1 to FIG. 16, and a description of it is omitted.

As shown in FIG. 17, a roof apparatus 202 according to the second preferred embodiment is provided with a front connection portion 229 according to the second preferred embodiment, instead of the front connection portion 29 according to the first preferred embodiment, and has the same arrangement as the roof apparatus 2 according to the first preferred embodiment except the front connection portion.

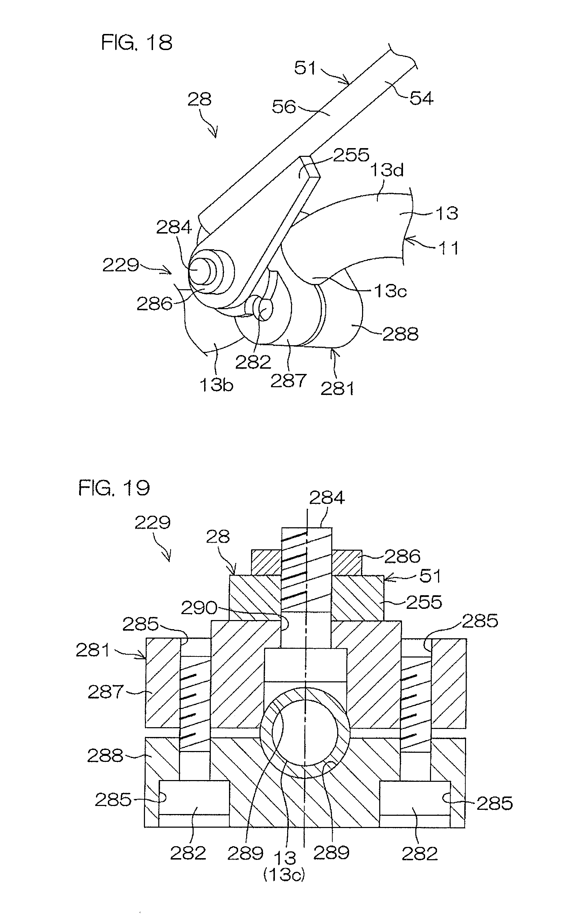

As shown in FIG. 19, the front connection portion 229 includes a front bracket 281 that grasps the handle bar 13, two base bolts 282 that press the inner surface of the front bracket 281 against the outer peripheral surface of the cylindrical handle bar 13, and a connection bolt 284 and a connection nut 286 by both of which the front bracket 281 is connected to the front unit 28.

As shown in FIG. 17, the two front brackets 281 are disposed on the right side and on the left side of the meter M1 respectively. As shown in FIG. 19, the front bracket 281 includes two brackets (first bracket 287 and second bracket 288) that grasp the handle bar 13. The first bracket 287 and the second bracket 288 face each other with the handle bar 13 therebetween. Each of the first and second brackets 287 and 288 includes a handle supporting surface 289 that has a circular-arc cross section and that is in contact with the outer peripheral surface of the handle bar 13 and two bolt insertion holes 285 in which the base bolts 282 are inserted respectively. The handle bar 13 is disposed between the two bolt insertion holes 285. Therefore, the handle bar 13 is disposed between the two base bolts 282.

As shown in FIG. 19, the head portion of the base bolt 282 is contained in the bolt insertion hole 285 of the second bracket 288. The shaft portion of the base bolt 282 is attached to a female screw portion provided in the bolt insertion hole 285 of the first bracket 287. The handle supporting surface 289 of the first and second brackets 287 and 288 is thereby pressed against the outer peripheral surface of the handle bar 13, and the handle bar 13 is sandwiched by the first and second brackets 287 and 288 in the axial direction of the base bolt 282. As a result, the front bracket 281 is fixed to the handle bar 13.

As shown in FIG. 19, the connection bolt 284 is inserted in a connection hole 290 formed in the first bracket 287. The connection hole 290 is opened at the handle supporting surface 289 of the first bracket 287, and is opened at the outer surface (in FIG. 19, upper surface) of the first bracket 287. The head portion of the connection bolt 284 is contained in the connection hole 290. The shaft portion of the connection bolt 284 protrudes from the outer surface of the first bracket 287 through the connection hole 290. The connection bolt 284 is disposed on the extension line of the diameter of the handle bar 13. The connection bolt 284 extends in the radial direction of the handle bar 13. The connection bolt 284 is parallel to each base bolt 282.

As shown in FIG. 17, a handle connection portion 255 of the front unit 28 is disposed in front of the handle bar 13 when the vehicle is viewed planarly. The handle connection portion 255 is disposed on the outer side in the vehicle width direction of the meter M1. As shown in FIG. 18, the shaft portion of the connection bolt 284 passes through the handle connection portion 255, and protrudes forwardly from the handle connection portion 255. The connection nut 286 is attached to the shaft portion of the connection bolt 284 in front of the handle connection portion 255. As shown in FIG. 19, the handle connection portion 255 is tightened by the connection nut 286 and by the first bracket 287 in the axial direction of the connection bolt 284. The front unit 28 is thereby fixed to the front bracket 281. As a result, the front unit 28 is connected to the handle 11.

As shown in FIG. 18, the front bracket 281 is connected to the intermediate portion 13c of the handle bar 13. Therefore, the front bracket 281 is disposed at a more inward position in the vehicle width direction than the outer curved portion 13d of the handle bar 13. As shown in FIG. 17, the intermediate portion 13c of the handle bar 13 is disposed between the central portion 13a of the handle bar 13 and the outer end portion 13e of the handle bar 13 in the vehicle width direction. The handle holder 15 is attached to the central portion 13a of the handle bar 13. The grip 14 is attached to the outer end portion 13e of the handle bar 13. Therefore, the front unit 28 is connected to the handle 11 between the handle holder 15 and the grip 14 in the vehicle width direction.

As described above, in the second preferred embodiment, the front unit 28 is connected to the intermediate portion 13c of the handle bar 13. Therefore, it is easy to attach the front unit 28 to the handle bar 13. Additionally, the lower end of the front unit 28 can be made smaller in size in the vehicle width direction than when the front unit 28 is connected to the handle bar 13 at a more outward position in the vehicle width direction than the intermediate portion 13c of the handle bar 13. Therefore, an increase in the load applied to the handle 11 can be restrained, and the comfort of the rider can be improved.

### Third Preferred Embodiment

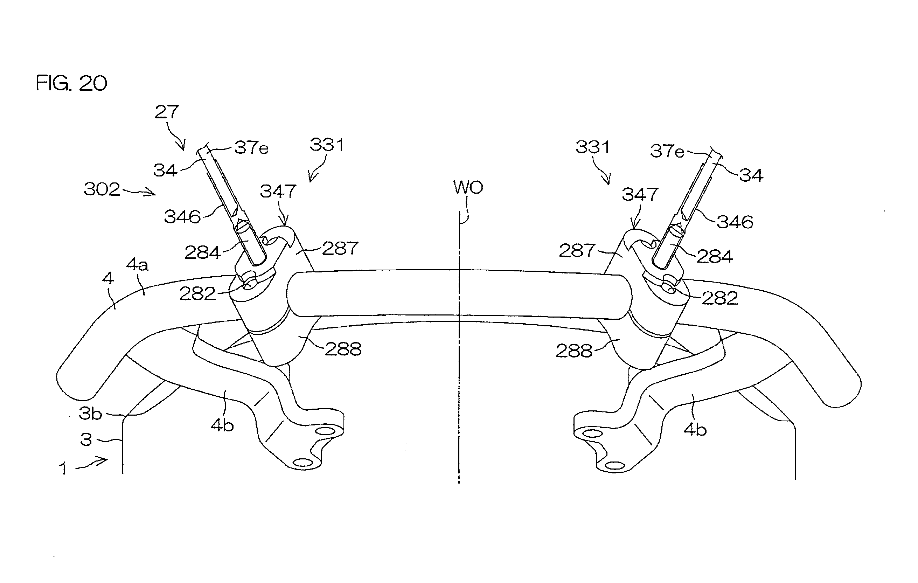

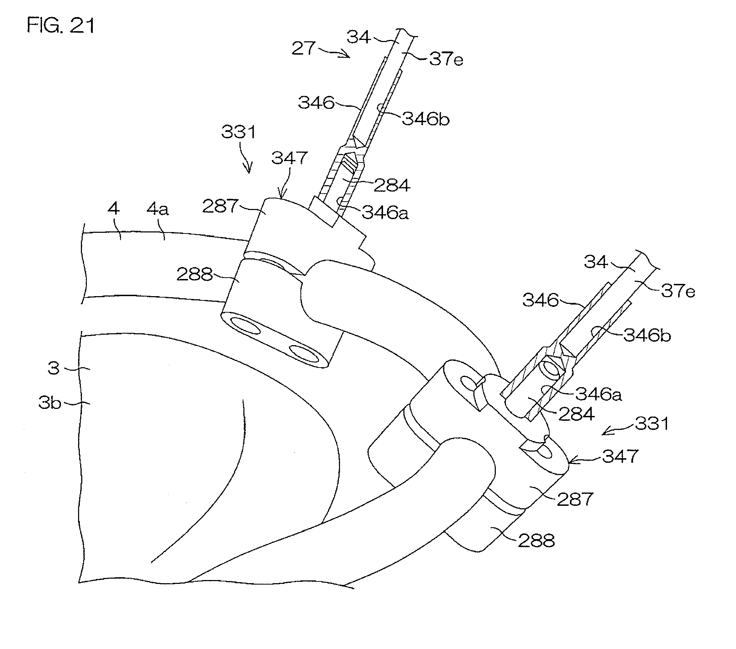

Next, a third preferred embodiment will be described. In FIG. 20 and FIG. 21 below, the same reference sign as in FIG. 1 to FIG. 19 is given to a component equivalent to each component shown in FIG. 1 to FIG. 19, and a description of it is omitted.

As shown in FIG. 20, a roof apparatus 302 according to the third preferred embodiment is provided with a rear connection portion 331 according to the third preferred embodiment, instead of the rear connection portion 31 according to the first preferred embodiment, and has the same arrangement as the roof apparatus 2 according to the first preferred embodiment except the rear connection portion.

As shown in FIG. 20, the rear connection portion 331 includes two rear brackets 347 that grasp the grab portion 4a of the grab frame 4, the two base bolts 282 that press the inner surface of the rear bracket 347 against the outer peripheral surface of the cylindrical grab portion 4a, two rear holders 346 that hold the roof unit 27, and the connection bolt 284 by which the rear bracket 347 is connected to the rear holder 346.

As shown in FIG. 20, the two rear brackets 347 are spaced in the vehicle width direction. The two rear brackets 347 are disposed on the right side and on the left side of the center WO in the width direction respectively. Each rear bracket 347 is disposed behind the seat 3. The rear bracket 347 is disposed at a more rearward position than the bracket portion 4b of the grab frame 4. The rear bracket 347 includes the first bracket 287 and the second bracket 288 (see FIG. 19). The shaft portion of the connection bolt 284 protrudes upwardly from the first bracket 287 of the rear bracket 347.

As shown in FIG. 21, the rear holder 346 is formed in a cylindrical shape extending from the rear bracket 347 rearwardly and upwardly. A projection portion of the connection bolt 284 that protrudes upwardly from the rear bracket 347 is inserted in a bolt insertion hole 346a of the rear holder 346 from below the rear holder 346. The shaft portion of the connection bolt 284 is attached to a female screw portion formed in the bolt insertion hole 346a. The rear holder 346 is thereby fixed to the rear bracket 347.

As shown in FIG. 21, the first elastic shaft 37e of the roof unit 27 extends from the rear holder 346 rearwardly and upwardly. The first elastic shaft 37e is inserted in a shaft insertion hole 346b of the rear holder 346 from below the rear holder 346. The lower end of the roof unit 27 is thereby held by the two rear holders 346. The grab frame 4 is fixed to the vehicle body frame 5 (see FIG. 3). Therefore, the lower end of the roof unit 27 is fixed to the vehicle body frame 5 through the rear connection portion 331 and the grab frame 4. The roof unit 27 is thereby connected to the rear of the saddle type vehicle 1.

### Other Preferred Embodiments

As described in the above preferred embodiments, the saddle type vehicle 1 is a scooter-type motorcycle. However, the saddle type vehicle 1 may be a sports-type motorcycle, or may be an off-road-type motorcycle, or may be a moped. Additionally, the saddle type vehicle 1 is not limited to a motorcycle, and may be an all-terrain vehicle, or may be a snowmobile.

Additionally, as described in the above preferred embodiments, the upper portion (upper frame 52) of the front unit 28 is formed in an inverted V-shape when the vehicle is viewed frontally as shown in FIG. 4. However, the upper portion of the front unit 28 is not limited to the aforementioned shape if it has a shape that does not cause interference with the roof unit 27.

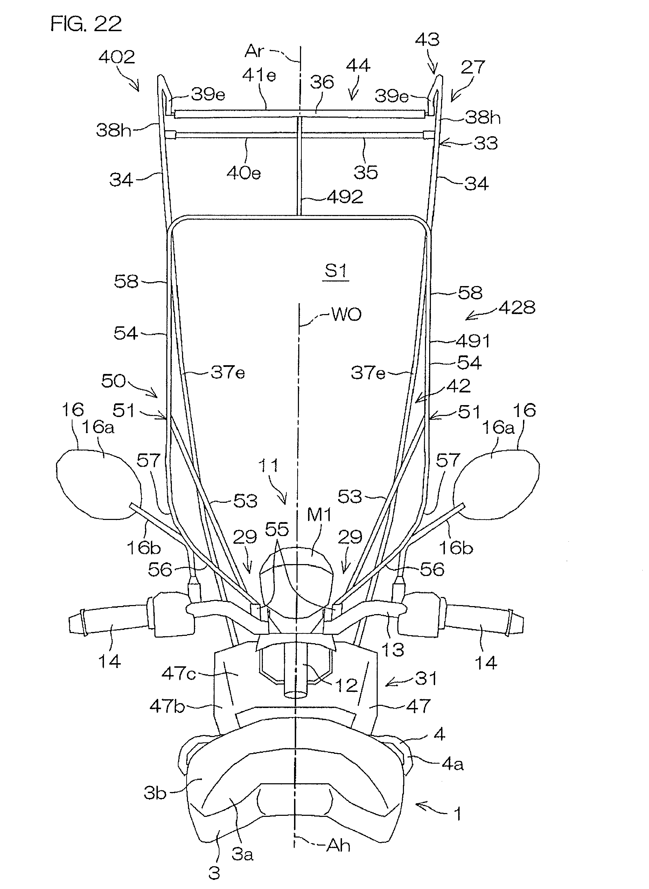

For example, a front unit 428 may include a main portion 491 that extends upwardly from the handle 11 and a single shaft portion 492 that extends upwardly from the main portion 491 toward the upper connection portion 30 as in a roof apparatus 402 shown in FIG. 22. This arrangement makes it possible to reduce the upper portion of the front unit 428 in size, and makes it possible to lighten the front unit 428. As a result, an increase in the load applied to the handle 11 can be restrained. Additionally, the width of the upper portion of the front unit 428 is narrow, and therefore the front unit 428 does not interfere with the roof unit 27 when the handle 11 is turned.

Additionally, as described in the above preferred embodiments, the outer edge of the front unit 28 is formed of frames, and the central portion of the front unit 28 in the vehicle width direction is a space as shown in FIG. 4. Likewise, as described above, the outer edge of the roof unit 27 is formed of frames, and the central portion of the roof unit 27 in the vehicle width direction is a space as shown in FIG. 5. However, if the outer edge of the front unit 28 is formed of frames, a thin sheet (front shield) bridged between left and right frames may be disposed at the front unit 28. Additionally, at least one of the roof unit 27 and the front unit 28 may include a panel continuous from the right side edge to the left side edge in the vehicle width direction.

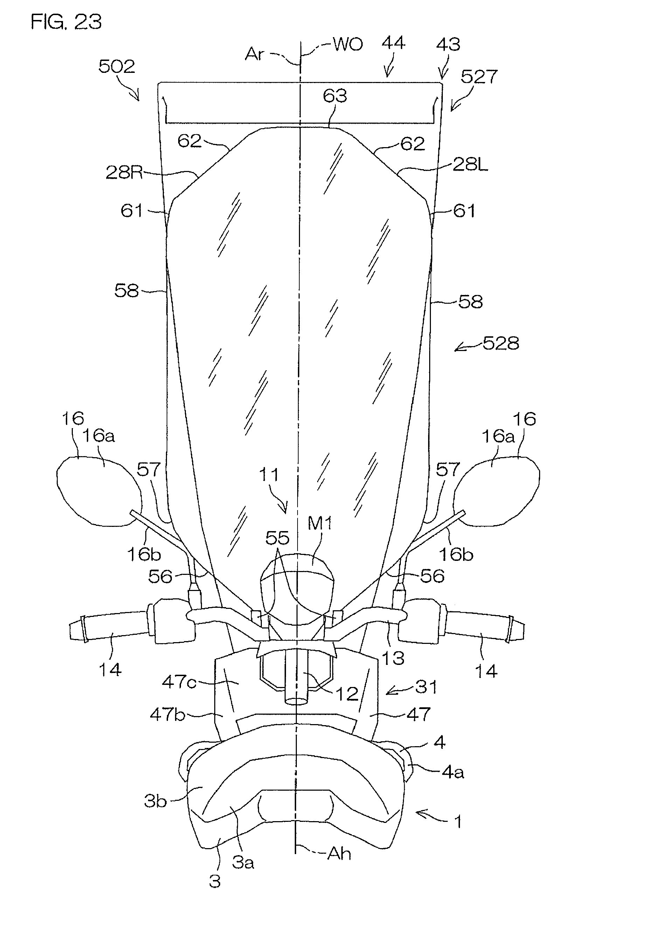

For example, a front unit 528 may include a panel continuous from the right side edge of the front unit 528 to the left side edge of the front unit 528 in the vehicle width direction as in a roof apparatus 502 shown in FIG. 23. Likewise, a roof unit 527 may include a panel continuous from the right side edge of the roof unit 527 to the left side edge of the roof unit 527 in the vehicle width direction. This arrangement makes it possible to more reliably protect a rider from rain, etc., because the front unit 528 functions as a front shield that blocks rain, wind, etc., spattering rearwardly toward a rider while the saddle type vehicle 1 is traveling. In the roof apparatus 502 shown in FIG. 23, the whole of the front unit 528 is not necessarily required to be transparent if a portion located in front of the rider is transparent.

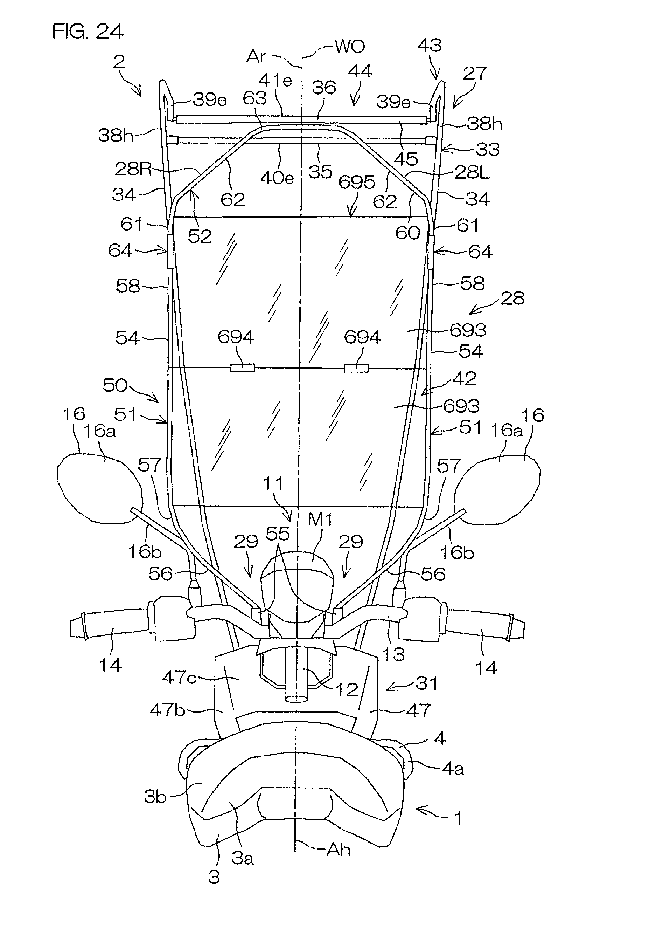

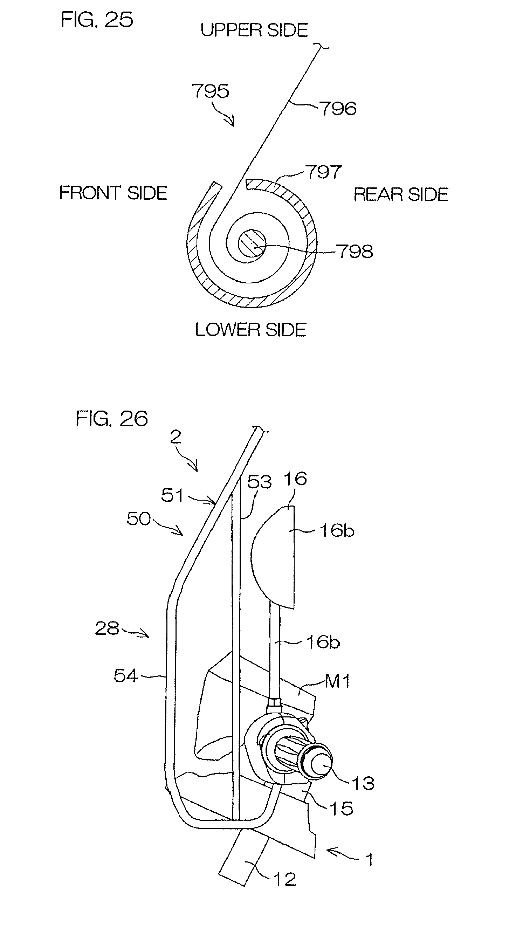

Additionally, if a front shield that blocks rain, etc., spattering rearwardiy toward a rider is mounted on the roof apparatus, the front shield may be a stationary-type shield shown in FIG. 23, or may be a collapsible or windable shield shown in FIG. 24 and FIG. 25.

For example, as shown in FIG. 24, a collapsible front shield 695, which includes a plurality of shield plates 693 (in FIG. 24, two shield plates) and a hinge 694 by which the two shield plates 693 are connected together rotatably around a horizontal axis, may be disposed at the front unit 28. The two shield plates 693 are arranged in the up-down direction when the vehicle is viewed frontally. The two shield plates 693 are disposed at higher positions than the handle 11. The shield plate 693 overlaps with the center WO in the width direction when the vehicle is viewed frontally. The right end and the left end of the shield plate 693 are supported by the front frame 50 of the front unit 28. The hinge 694 rotatably connects the upper end of the lower shield plate 693 and the lower end of the upper shield plate 693 together. For example, the upper shield plate 693 is turned downwardly around the hinge 694 when the front shield 695 is folded.

Additionally, as shown in FIG. 25, a windable front shield 795, which includes a belt-shaped windable roll sheet 796 and a sheet case 797 that contains the roll sheet 796, may be disposed at the front unit 28. The sheet case 797 has a cylindrical shape extending in the vehicle width direction. A portion of the roll sheet 796 is disposed in the sheet case 797, and the lower end of the roll sheet 796 is connected to a winding-up shaft 798 disposed in the sheet case 797. The roll sheet 796 extends upwardly from an opening of the sheet case 797. The upper end of the roll sheet 796 is detachably attached to the front frame 50. When the roll sheet 796 is wound up, the upper end of the roll sheet 796 is detached from the front frame 50, and then the winding-up shaft 798 is rotated automatically or manually. The roll sheet 796 is thereby wound around the winding-up shaft 798 in the sheet case 797.

Additionally, as described in the above preferred embodiments, the front unit 28 is connected to the handle 11 between the handle holder 15 and the grip 14 in the vehicle width direction. However, the front unit 28 may be connected to the handle 11 at a more inward position in the vehicle width direction than the handle holder 15, or may be connected to the handle 11 at a more outward position in the vehicle width direction than the grip 14.

Additionally, as described in the above preferred embodiments, the right side edge 28R and the left side edge 28L of the front unit 28 extend downwardly from the upper connection portion 30 toward the outer side in the vehicle width direction. However, the right side edge 28R and the left side edge 28L of the front unit 28 may extend downwardly from the upper connection portion 30 toward the inner side in the vehicle width direction, or may be parallel to the center WO in the width direction.

Additionally, as described in the above preferred embodiments, the roof unit 27 includes the pent-roof portion 45. However, the pent-roof portion 45 may be excluded. In other words, the upper connection portion 30 may be disposed at the front end of the roof unit 27.

Additionally, as described in the above preferred embodiments, the front unit 28 extends from the handle 11 forwardly and upwardly. However, the front unit 28 may extend from the handle 11 vertically upward, or may extend from the handle 11 horizontally forward. Additionally, as shown in FIG. 26, the front unit 28 may extend downwardly from the handle 11, then pass in front of the handle 11, and further extend to a position higher than the handle 11.

Additionally, as described in the above preferred embodiments, a portion (the lower parallel portion 58 and the upper parallel portion 61) of the front unit 28 is parallel to the rotational axis Ah when the vehicle is viewed laterally. However, the portion equivalent to the lower and upper parallel portions 58 and 61 may incline with respect to the rotational axis Ah when the vehicle is viewed laterally.

Additionally, as described in the above preferred embodiments, the height adjustment mechanism 64 that changes the height of the front unit 28 is mounted on the roof apparatus 2. However, the height adjustment mechanism 64 may be excluded, and the height of the roof unit 27 and the height of the front unit 28 may be constant.

Additionally, as described in the above preferred embodiments, the roof unit 27 is connected to the rear of the saddle type vehicle 1 behind the seat 3. However, the roof unit 27 may be connected to the rear of the saddle type vehicle 1 beside the seat 3, or may be connected to the rear of the saddle type vehicle 1 at a plurality of positions including the position behind the seat 3 and the position beside the seat 3.

Additionally, as described in the above preferred embodiments, the right side edge 27R and the left side edge 27L of the roof unit 27 extend upwardly from the rear of the saddle type vehicle 1 toward the outer side in the vehicle width direction as shown in FIG. 5. However, the right side edge 27R and the left side edge 27L of the roof unit 27 may extend upwardly from the rear of the saddle type vehicle 1 toward the inner side in the vehicle width direction, or may be parallel to the center WO in the width direction.

Additionally, as described in the above preferred embodiments, the roof unit 27 is connected to the grab frame 4 of the saddle type vehicle 1. However, the roof unit 27 may be connected to a member other than the grab frame 4 if it is at the rear of the saddle type vehicle 1. For example, the roof unit 27 may be connected to the vehicle body frame 5 or to the seat 3. Additionally, the roof unit 27 may be connected to a plurality of members. For example, the roof unit 27 may be connected to both the grab frame 4 and the vehicle body frame 5. Additionally, the grab frame 4 may be excluded.

Additionally, as described in the above preferred embodiments, the roof unit 27 extends from the rear of the saddle type vehicle 1 obliquely rearward and upward. However, the roof unit 27 may extend vertically upward from the rear of the saddle type vehicle 1, or may extend horizontally rearward.

Additionally, as described in the above preferred embodiments, a portion of the roof frame 33 of the roof unit 27 is formed of an elastically deformable member (elastic shaft). Additionally, as described above, the front frame 50 of the front unit 28 is formed of a hard shaft that is harder than an elastic shaft. However, the whole of the roof frame 33 may be formed of an elastic shaft or of a hard shaft. Additionally, a portion of the front frame 50 may be formed of an elastically deformable member (elastic shaft).

Additionally, as described in the above preferred embodiments, the roof unit 27 is formed of a plurality of members (a roof sheet, a plurality of shafts, and a plurality of joints). Likewise, as described above, the front unit 28 is formed of a plurality of members. However, the division position (connection position between members) of the roof unit 27 may be a position other than the positions according to the above preferred embodiments. Additionally, the number of members forming the roof unit 27 may be greater or smaller than the number according to the above preferred embodiments. For example, the roof unit 27 may be a single integrally-formed member. The same applies to the front unit 28.

Additionally, as described in the above preferred embodiments, the handle 11 has the handle holder 15 that connects the handle bar 13 to the steering shaft 12 in addition to the steering shaft 12 and the handle bar 13. However, the handle 11 is not necessarily required to have the handle holder 15. For example, the handle 11 may be formed in a T-shape when the vehicle is viewed frontally, which includes the handle bar 13 extending in the vehicle width direction and the steering shaft 12 extending downwardly from the central portion 13a of the handle bar 13. In this case, the steering shaft 12 and the handle bar 13 may be a single integrally-formed member, or may be different members fixed by welding.

Additionally, two or more of all preferred embodiments mentioned above may be combined together.

## Claims

1. A roof apparatus (2; 202; 302; 402; 502) for saddle type vehicles (1), at least one portion of the roof apparatus (2; 202; 302; 402; 502) being disposed above a seat (3) of a saddle type vehicle (1), the roof apparatus (2; 202; 302; 402; 502) comprising:
a roof unit (27; 527) at least one portion of which is disposed above the seat (3) of the saddle type vehicle (1), the roof unit (27; 527) being connected to a rear of the saddle type vehicle (1);
a front unit (28; 428; 528) that is connected to a handle (11) of the saddle type vehicle (1) and that extends upwardly from the handle (11); and
an upper connection portion (30) by which the roof unit (27; 527) and the front unit (28; 428; 528) are connected together, wherein
a rotational axis (Ah) of the handle (11) extends rearwardly and upwardly,
the upper connection portion (30) has a turnable shaft (73),
a turn axis (Ar) of the turnable shaft (73) of the upper connection portion (30) extends rearwardly and upwardly,
the front unit (28; 428; 528) is arranged to turn together with the handle (11) around the turn axis (Ar) of the turnable shaft (73) with respect to the roof unit (27; 527), and
the front unit (28; 428; 528) is formed so as not to interfere with the roof unit (27; 527) when a steering angle of the handle (11) changes from a minimum to a maximum.

2. A roof apparatus (2; 202; 302; 402; 502) for saddle type vehicles (1) according to claim 1, wherein the front unit (28; 428; 528) is connected to the handle (11) between a meter (M1) and a grip (14) of the handle (11) grasped by a rider in a vehicle width direction.

3. A roof apparatus (2; 202; 302; 402; 502) for saddle type vehicles (1) according to claim 1 or 2, wherein the front unit (28; 428; 528) is connected to the handle (11) between a handle holder (15) attached to a handle bar (13) of the handle (11) and a grip (14) of the handle (11) grasped by a rider in a vehicle width direction.

4. A roof apparatus (202) for saddle type vehicles (1) according to claim 3, wherein the handle (11) includes a handle bar (13) to which the handle holder (15) is attached, the handle bar (13) including:
a linear central portion (13a) to which the handle holder (15) is attached;
a linear intermediate portion (13c) disposed at a more outward position in the vehicle width direction than the central portion (13a);
a linear outer end portion (13e) that is disposed at a more outward position in the vehicle width direction than the intermediate portion (13c) and to which the grip (14) is attached; and
an outer curved portion (13d) that is curved and that extends from an outer end of the intermediate portion (13c) to an inner end of the outer end portion (13e), and
wherein the front unit (28; 428; 528) is connected to the intermediate portion (13c).

5. A roof apparatus (2) for saddle type vehicles (1) according to claim 3, wherein the handle (11) includes a handle bar (13) to which the handle holder (15) is attached, the handle bar (13) including:
a linear central portion (13a) to which the handle holder (15) is attached;
a linear intermediate portion (13c) disposed at a more outward position in the vehicle width direction than the central portion (13a);
a linear outer end portion (13e) that is disposed at a more outward position in the vehicle width direction than the intermediate portion (13c) and to which the grip (14) is attached; and
an outer curved portion (13d) that is curved and that extends from an outer end of the intermediate portion (13c) to an inner end of the outer end portion (13e), and
wherein the front unit (28; 428; 528) is connected to the outer curved portion (13d).

6. A roof apparatus (2; 202; 302; 502) for saddle type vehicles (1) according to any one of claim 1 to 5, wherein a right side edge (28R) and a left side edge (28L) of the front unit (28; 428; 528) extend downwardly from the upper connection portion (30) toward an outer side in the vehicle width direction.

7. A roof apparatus (402) for saddle type vehicles (1) according to any one of claim 1 to 5, wherein the front unit (428) includes a main portion (491) that extends upwardly from the handle (11) and a single shaft portion (492) that extends upwardly from the main portion (491) toward the upper connection portion (30).

8. A roof apparatus (2; 202; 302; 402; 502) for saddle type vehicles (1) according to any one of claim 1 to 7, wherein the roof unit (27; 527) includes a pent-roof portion (45) disposed at a more forward position than the upper connection portion (30).

9. A roof apparatus (2; 202; 302; 402; 502) for saddle type vehicles (1) according to any one of claim 1 to 8, wherein the upper connection portion (30) further includes a rolling bearing (72) disposed on the turn axis (Ar) of the turnable shaft (73),
the rolling bearing (72) including:
an inner ring (72a) fixed to either one of the roof unit (27; 527) and the front unit (28; 428; 528);
an outer ring (72c) fixed to a remaining one of the roof unit (27; 527) and the front unit (28; 428; 528); and
a plurality of rolling elements (72b) disposed between the inner ring (72a) and the outer ring (72c).

10. A roof apparatus (2; 202; 302; 402; 502) for saddle type vehicles (1) according to any one of claim 1 to 9, wherein the front unit (28; 428; 528) includes:
a parallel portion (58, 61) parallel to the rotational axis (Ah) of the handle (11) when the roof apparatus (2; 202; 302; 402; 502) is viewed laterally; and
an upper inclined portion (62) that obliquely inclines with respect to the parallel portion (58, 61) when the roof apparatus (2; 202; 302; 402; 502) is viewed laterally and that extends upwardly from the parallel portion (58, 61).

11. A roof apparatus (2; 202; 302) for saddle type vehicles (1) according to any one of claim 1 to 10, further comprising a height adjustment mechanism (64) that changes a height from the seat (3) to the roof unit (27) by changing a height of the front unit (28).

12. A roof apparatus (2; 202; 302; 402; 502) for saddle type vehicles (1) according to any one of claim 1 to 11, wherein the roof unit (27; 527) is connected to the rear of the saddle type vehicle (1) behind the seat (3), and
wherein a right side edge (27R) and a left side edge (27L) of the roof unit (27; 527) extend upwardly from the rear of the saddle type vehicle (1) toward the outer side in the vehicle width direction.

13. A roof apparatus (2; 202; 302; 402; 502) for saddle type vehicles (1) according to any one of claim 1 to 12, wherein the saddle type vehicle (1) further includes a grab frame (4) that is disposed at least behind the seat (3) when the saddle type vehicle (1) is viewed planarly and that is grasped by a user of the saddle type vehicle (1), and wherein the roof unit (27; 527) is connected to the grab frame (4).

14. A roof apparatus (2; 202; 302; 402) for saddle type vehicles (1) according to any one of claim 1 to 13, wherein at least one of the roof unit (27) and the front unit (28; 428) includes a left-and-right pair of frames (34,51) spaced in the vehicle width direction.

15. A saddle type vehicle (1) including the roof apparatus (2; 202; 302; 402; 502) according to any one of claim 1 to 14.
